# EUROPEAN PATENT APPLICATION

(11) **EP 4 746 190 A1**
(43) Date of publication of application: **20.05.2026**
(21) Application number: 25211839.3
(22) Date of filing: 28.10.2025
(51) Int. Cl.: H01P 3/02, H01Q 3/40, H01Q 21/00, H01Q 25/00, H01P 5/02

(54) **MULTIPLE BEAM SERIAL SIGNAL DISTRIBUTION IN PHASED ARRAY ANTENNAS**

(30) Priority: 16.11.2024 US 202463721452 P
(71) Applicant: Space Exploration Technologies Corp., Hawthorne, California 90250 (US)
(72) Inventor: KNOPIK, Vincent, HAWTHORNE, 90250 (US); AGAH, Amir, HAWTHORNE, 90250 (US)
(74) Representative: Mewburn Ellis LLP

(57) **Abstract**

A RF interchange includes a first differential transmission line extending between a first port and a first feed-through port. The interchange includes a second differential transmission line extending parallel to the first differential transmission line, between a second port and a second feed-through port. The interchange includes a third differential transmission line extending across the first differential transmission line and the second differential transmission line toward a first distribution/combination port. The interchange includes a first crossing section in which traces of the first differential transmission line and traces of the third differential transmission line are canted to form coupling regions in which positive traces extend in parallel and overlap, and in which negative traces extend in parallel and overlap, wherein the first crossing section is configured, when a first signal propagates on the first differential transmission line, to couple the first signal onto the third differential transmission line.

## Description

### CROSS-REFERENCE TO RELATED APPLICATIONS

The present application claims the benefit of, and priority to, U.S. Provisional Patent Application No. 63/721,452, filed November 16, 2024, entitled "MULTIPLE BEAM SERIAL SIGNAL DISTRIBUTION IN PHASED ARRAY ANTENNAS", the contents of which are hereby incorporated by reference in their entirety.

### TECHNICAL FIELD

The present disclosure pertains to phased array antennas for satellite communication systems and, more particularly, systems and methods for multiple beam serial signal distribution in phased array antennas.

### BACKGROUND

An antenna (such as a dipole antenna) typically generates radiation in a pattern that has a preferred direction. For example, the generated radiation pattern is stronger in some directions, i.e., the main lobes, and weaker in other directions, i.e., the side lobes. Likewise, when receiving electromagnetic signals, the antenna has the same preferred direction. Signal quality (e.g., signal to noise ratio or SNR), whether in transmitting or receiving scenarios, can be improved by aligning the preferred direction of the antenna with a direction of the target or source of the signal. A phased array antenna can be composed of an array of antenna elements, each having an electronically controlled phase and amplitude. An advantage of a phased array antenna is its ability to transmit and/or receive signals in a preferred direction (e.g., the antenna's beamforming ability) by adjusting each antenna element's phase delay and amplitude to "direct" the resulting transmitted or received wavefront.

Phased array antennas and, more specifically for transmitting, each antenna element in the array, must be fed one or more radio frequency (RF) signals, or beams, to be emitted; each beam being derived from a common digital signal. Similarly, when receiving, the beams received at each antenna element in the array must be routed and combined to reconstruct one or more received digital signals. As phased arrays increase in size, i.e., number of elements and scale, the distribution and combination network for the RF signals tends to degrade the RF signals as they propagate further and through more components.

It would be advantageous to configure phased array antennas with larger arrays having increased bandwidth while maintaining a high ratio of the main lobe power to the side lobe power. Likewise, it would be advantageous to configure phased array antennas and associated circuitry having improved signal isolation, less loss, and/or reduced size. Accordingly, embodiments of the present disclosure are directed to these and other improvements in phased array antennas or portions thereof.

### SUMMARY

In some examples, systems and techniques are described for distributing multiple beams bidirectionally and serially throughout a phased array antenna - namely between a digital beamformer and numerous individual antenna elements.

In some aspects, the techniques described herein relate to a radio frequency (RF) interchange including: a first differential transmission line extending longitudinally between a first serial distribution port and a first feed-through port; a second differential transmission line extending longitudinally, parallel to the first differential transmission line, between a second serial distribution port and a second feed-through port; a third differential transmission line extending laterally across the first differential transmission line and the second differential transmission line toward a first distribution/combination port; a first crossing section in which traces of the first differential transmission line and traces of the third differential transmission line are canted to form respective coupling regions in which positive traces extend in parallel and overlap, and in which negative traces extend in parallel and overlap, wherein the first crossing section is configured, when a first signal propagates on the first differential transmission line, to couple the first signal onto the third differential transmission line; and a second crossing section in which traces of the second differential transmission line and the traces of the third differential transmission line are canted to form respective isolation regions in which the traces of the second differential transmission line cross orthogonally with the traces of the third differential transmission line, wherein the second crossing section is configured, when a second signal propagates on the second differential transmission line, to isolate the second signal from the third differential transmission line.

In some aspects, the techniques described herein relate to a phased array antenna system including: a digital beamformer (DBF) configured to transmit and receive radio frequency (RF) signals over an RF input/output (RFIO) channel; and a series of dual beam front end modules electrically coupled to the RFIO channel of the DBF via a first serial distribution channel and a second serial distribution channel, each dual beam front end module (FEM) electrically coupled to a next dual beam FEM by a first feed-through channel and a second feed-through channel, each dual beam FEM including: an RF interchange configured to: electrically couple a first port and a second port to the first serial distribution channel; electrically couple a third port and a fourth port to the second serial distribution channel; and electrically couple the first serial distribution channel and the second serial distribution channel to the first feed-through channel and the second feed-through channel, respectively.

In some aspects, the techniques described herein relate to a bidirectional radio frequency (RF) buffer circuit including: a transmit buffer configured to amplify a first RF signal for transmission over a channel; a receive buffer configured to amplify a second RF signal received over the channel; a power source coupled to the transmit buffer and the receive buffer, and configured to supply power to the transmit buffer and the receive buffer; and a switch coupled to the power source and configured to disconnect the receive buffer from the power source when transmitting.

In some aspects, the techniques described herein relate to a radio frequency (RF) transmission line having at least a first metal layer, a second metal layer, and a third metal layer, the RF transmission line including: a differential pair of traces extending in parallel in a longitudinal dimension and disposed on the second metal layer; a plurality of top metal shield line segments extending in a lateral dimension orthogonal to the differential pair of traces and disposed in the first metal layer above the differential pair of traces; a plurality of bottom metal shield line segments extending in the lateral dimension orthogonal to the differential pair of traces and disposed in the third metal layer below the differential pair of traces; a plurality of vias extending from the first metal layer to the third metal layer and electrically coupling corresponding top metal shield line segments, of the plurality of top metal shield line segments, and corresponding bottom metal shield line segments, of the plurality of bottom metal shield line segments; and a shield connection extending parallel to the differential pair of traces in the longitudinal dimension and disposed on the third metal layer, the shield connection electrically coupling the plurality of bottom metal shield line segments at a midpoint of the plurality of bottom metal shield line segments in the lateral dimension.

In some aspects, the techniques described herein relate to a radio frequency (RF) transmission line having at least a first metal layer, a second metal layer, and a third metal layer, the RF transmission line including: a differential pair of traces extending in parallel in a longitudinal dimension and disposed on the first metal layer; a first top metal shield line and a second top metal shield line extending in parallel to the differential pair of traces and disposed in the first metal layer coplanar with the differential pair of traces, the first top metal shield line spaced from the differential pair of traces in a lateral dimension, and the second top metal shield line spaced from the differential pair of traces in the lateral dimension and opposite the first top metal shield line; a plurality of bottom metal shield line segments extending in the lateral dimension orthogonal to the differential pair of traces and disposed in the third metal layer below the differential pair of traces; a first plurality of vias extending from the first top metal shield line in the first metal layer to the third metal layer and electrically coupling the first top metal shield line to a corresponding bottom metal shield line, of the plurality of bottom metal shield line segments; a second plurality of vias extending from the second top metal shield line in the first metal layer to the third metal layer and electrically coupling the second top metal shield line to a corresponding bottom metal shield line, of the plurality of bottom metal shield line segments; and a shield connection extending parallel to the differential pair of traces in the longitudinal dimension and disposed on the third metal layer, the shield connection electrically coupling the plurality of bottom metal shield line segments at a midpoint of the plurality of bottom metal shield line segments in the lateral dimension.

In some aspects, the techniques described herein relate to a radio frequency (RF) transmission line having at least a first metal layer, a second metal layer, and a third metal layer, the RF transmission line including: a trace extending in a longitudinal dimension and disposed on the second metal layer; a plurality of top metal shield line segments extending in a lateral dimension orthogonal to the trace and disposed in the first metal layer above the trace; a plurality of bottom metal shield line segments extending in the lateral dimension orthogonal to the trace and disposed in the third metal layer below the trace; a plurality of vias extending from the first metal layer to the third metal layer and electrically coupling corresponding top metal shield line segments, of the plurality of top metal shield line segments, and corresponding bottom metal shield line segments, of the plurality of bottom metal shield line segments; and a shield connection extending parallel to the trace in the longitudinal dimension and disposed on the third metal layer, the shield connection electrically coupling the plurality of bottom metal shield line segments at a midpoint of the plurality of bottom metal shield line segments in the lateral dimension.

In some aspects, the techniques described herein relate to a radio frequency (RF) transmission line having at least a first metal layer, a second metal layer, and a third metal layer, the RF transmission line including: a trace extending in a longitudinal dimension and disposed on the first metal layer; a first top metal shield line and a second top metal shield line extending in parallel to the trace and disposed in the first metal layer coplanar with the trace, the first top metal shield line spaced from the trace in a lateral dimension, and the second top metal shield line spaced from the trace in the lateral dimension and opposite the first top metal shield line; a plurality of bottom metal shield line segments extending in the lateral dimension orthogonal to the trace and disposed in the third metal layer below the trace; a first plurality of vias extending from the first top metal shield line in the first metal layer to the third metal layer and electrically coupling the first top metal shield line to a corresponding bottom metal shield line, of the plurality of bottom metal shield line segments; a second plurality of vias extending from the second top metal shield line in the first metal layer to the third metal layer and electrically coupling the second top metal shield line to a corresponding bottom metal shield line, of the plurality of bottom metal shield line segments; and a shield connection extending parallel to the trace in the longitudinal dimension and disposed on the third metal layer, the shield connection electrically coupling the plurality of bottom metal shield line segments at a midpoint of the plurality of bottom metal shield line segments in the lateral dimension.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and aspects, will become more apparent upon referring to the following specification, claims, and accompanying drawings.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIG. 1 is a block diagram of a portion of an example phased array antenna system in accordance with some examples of the present disclosure;
FIG. 2 is a top view of an example antenna lattice in accordance with some examples of the present disclosure;
FIG. 3a is a functional block diagram of an example front end module in accordance with some examples of the present disclosure;
FIG. 3b is a functional block diagram of the front end module shown in FIG. 3a illustrating dual beam feedthrough;
FIG. 3c is a functional block diagram of the front end module shown in FIG. 3a illustrating transmit mode;
FIG. 3d is a functional block diagram of the front end module shown in FIG. 3a illustrating receive mode;
FIG. 4a is a perspective schematic diagram of one example dual beam differential transmission line with local shield in accordance with some examples of the present disclosure;
FIG. 4b is a perspective schematic diagram of another example dual beam differential transmission line with local shield in accordance with some examples of the present disclosure;
FIG. 5a is a cross-sectional diagram of one example differential transmission line with local shield in accordance with some examples of the present disclosure;
FIG. 5b is a top view diagram of the example differential transmission line with local shield shown in FIG. 5a;
FIG. 5c is a cross-sectional diagram of a second example differential transmission line with local shield in accordance with some examples of the present disclosure;
FIG. 5d is a cross-sectional diagram of a third example differential transmission line with local shield in accordance with some examples of the present disclosure;
FIG. 6a is a cross-sectional diagram of a fourth example differential transmission line with local shield in accordance with some examples of the present disclosure;
FIG. 6b is a top view diagram of the example differential transmission line with local shield shown in FIG. 6a;
FIG. 7a is a cross-sectional diagram of a one example single ended transmission line with local shield in accordance with some examples of the present disclosure;
FIG. 7b is a cross-sectional diagram of another example single ended transmission line with local shield in accordance with some examples of the present disclosure;
FIG. 8 is a cross-sectional diagram of one example dual beam differential transmission line with local shield in accordance with some examples of the present disclosure;
FIG. 9a is a top view diagram of one example dual beam RF interchange in accordance with some examples of the present disclosure;
FIG. 9b is a top view diagram of a section of the dual beam RF interchange shown in FIG. 9a;
FIG. 10 is a top view diagram of an example distribution section of a dual beam RF interchange in accordance with some examples of the present disclosure; and
FIG. 11 is a schematic diagram of an example bidirectional RF buffer circuit for use with a dual beam RF interchange in accordance with some examples of the present disclosure;

### DETAILED DESCRIPTION

Embodiments of the disclosed apparatuses and methods relate to phased array antenna systems utilizing multiple beam serial distribution to and from the antenna elements. Examples of the devices, systems, and/or methods of various embodiments are provided below. An embodiment of the devices, systems, and/or methods can include any one or more, and any combination of, the examples described below.

References in the specification to "one embodiment," "an embodiment," "an illustrative embodiment," "an example," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" can mean (A); (B); (C); (A and B); (B and C); (A and C); or (A, B, and C). Similarly, items listed in the form of "at least one of A, B, or C" can mean (A); (B); (C); (A and B); (B and C); (A and C); or (A, B, and C).

Language such as "top surface", "bottom surface", "vertical", "horizontal", and "lateral" in the present disclosure is meant to provide orientation for the reader with reference to the drawings and is not intended to be the required orientation of the components or to impart orientation limitations into the claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

In a phased array antenna, each antenna element is driven by a dedicated radio frequency (RF) transmitter, or transmit circuit, and/or a dedicated RF receiver, or receive circuit. The "RF transmitter" and "RF receiver" are generally used herein to refer to the end-to-end collection of components operating between a digital system, i.e., a modem, and an antenna, or antenna element, for the transmit path and the receive path, respectively, including, for example and without limitation, digital baseband beamforming components, RF waveform generators/receivers, and analog beamforming components. In some implementations, all such components are packaged together in a beamformer chip. In the disclosed phased array antenna systems, digital baseband beamforming components and RF waveform generators/receivers are packaged together for one or more given antenna elements in a digital beamformer (DBF). The DBF communicates with a modem, for example, to exchange digital data for transmitting and receiving. When transmitting, the DBF's digital baseband beamforming components construct one or more phase encoded beams to carry the digital data. The DBF's RF waveform generator components convert the one or more phase encoded beams from digital to analog, up-convert to RF, and amplify for transmission by the array of antenna elements. When receiving, the DBF's RF waveform receiver components amplify beams received by the array of antenna elements, down-convert to baseband, and digitize analog signals (e.g., convert from analog to digital). The digital beams are then recombined, phase decoded, and digitally filtered before communicating the received digital data to the modem.

In the disclosed phased array antenna systems, the DBF is paired with at least one "front end module" (FEM), generally incorporating analog beamforming components. The FEM could be a distinct FEM device, or chip, driving one or more antenna elements; or the FEM could be a component grouping within a DBF device, or chip, in which the RF transmitter and RF receiver are packaged. A DBF package, or a DBF and FEM pair, may include numerous RF transmitters and/or RF receivers for corresponding antenna elements. Alternatively, each DBF and FEM could be packaged independently for a single antenna element.

When transmitting, each antenna element in the phased array transmits an RF signal with a respective desired phase and amplitude to emit one or more desired directional beams. In some cases, a desired phase and amplitude are achieved by applying a particular phase shift and/or gain at the FEM for each antenna element based on an instruction from the DBF or other controller. The phase shifts and gains can be selected for each beam and each antenna element to produce constructive interference in a transmit direction (e.g., a beam steering direction). One or more RF signals can be distributed to each FEM from a DBF RF input/output (RFIO) channel. In phased array antennas having a large number of antenna elements, there may be numerous DBFs, each driving a network of FEMs via multiple RFIO channels, and each FEM driving one or more antenna elements. Accordingly, one or more digital signals are distributed to each DBF, conditioned and upconverted to RF signals, or beams, and then distributed to each FEM.

When receiving, the phased array is configured to receive from a particular beam steering direction. The FEM for each antenna element applies desired phase shifts and/or gains to produce constructive interference of signals received over the air from the particular beam steering direction, (e.g., a receive direction). Each antenna element in the phased array receives the same over the air RF signal at a different position on the array, generally resulting in a different phase and amplitude of the received RF signals at different antenna elements depending on a transmission location of the over the air RF signal and the position of the antenna element in the antenna lattice of the phased array. The desired phase shift and/or gain associated with the particular beam steering direction can be applied at the respective FEMs for each antenna element. In certain embodiments, the particular phase shift and/or gain to be applied can be based on an instruction from a DBF or other controller. In certain embodiments, by carefully applying gain and/or phase shifts to the received signals from the antenna elements, the received signals from different antenna elements can interfere constructively for signals received from the beam steering direction. The phase shifted and/or gain adjusted received RF signals are then routed to the DBF for recombination and/or down-conversion to a baseband or intermediate frequency signal. As described above, in phased array antennas having a large number of antenna elements, there may be numerous DBFs, each receiving RF signals from a network of FEMs, and each FEM receiving from one or more antenna elements. Accordingly, the received RF signal is routed through each FEM to a corresponding DBF.

Beams for transmission may be distributed serially by a DBF over a serial distribution channel to each FEM in a given FEM series, or "daisy chain." Each FEM distributes each beam to each of its corresponding antenna elements. Similarly, beams received over the air are routed from each antenna element to its corresponding FEM, and then routed serially through each FEM in a given FEM series to its corresponding DBF. The distribution and routing of beams within the FEM is conventionally achieved by a distribution/combination network that serially splits beams for transmission numerous times to feed to each antenna element and to feed through to a subsequent FEM. Likewise, the distribution/combination network serially combines received beams from each antenna element and feeds them through to a subsequent FEM or to the DBF. Each beam splitting or beam combining introduces loss to the distribution/combination network and consumes space for the beam splitting/combining components and routing. Similarly, lengthier signal paths and complex routing between the FEM and its corresponding antenna elements introduce opportunities for potential losses and cross-talk between beams. As phased array antennas increase in number of antenna elements, and as more FEMs are serially connected to a given DBF RF input/output (RFIO) channel, the challenges of signal distribution and combining described above compound.

The disclosed RF interchange enables higher density distribution and combination of RF signals bidirectionally, i.e., for both transmitting and receiving, while maintaining signal isolation and limiting losses.

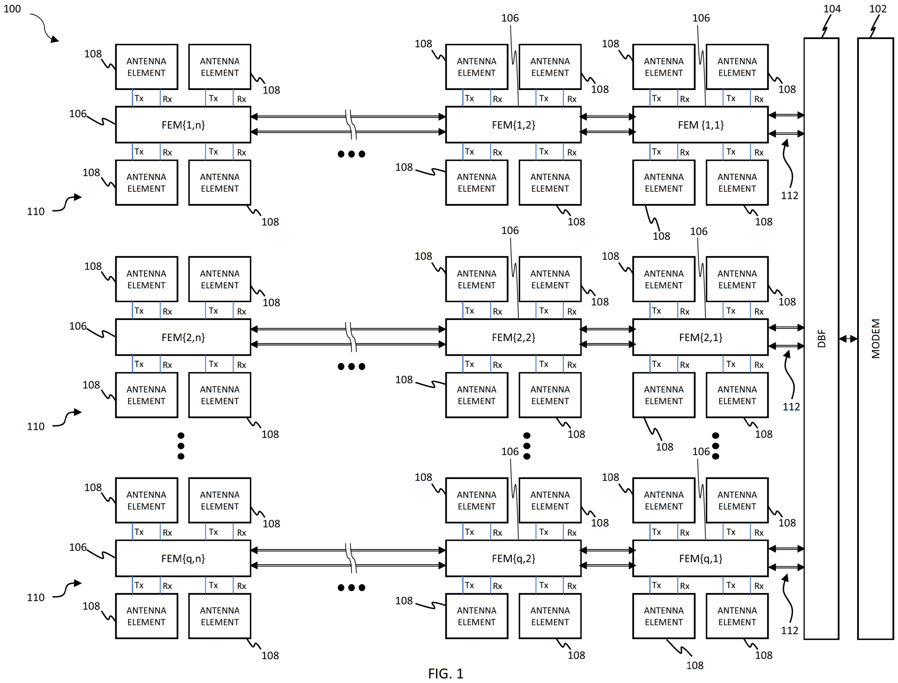

FIG. 1 is a block diagram of an example phased array antenna system 100 in accordance with some embodiments of the present disclosure. Phased array antenna system 100, also referred to as a node, communication device, device, and/or the like, is a component of a larger communications system. In some embodiments, phased array antenna system 100 is included in a wireless communications system, a wideband communications system, a satellite-based communications system, a terrestrial-based communications system, a non-geostationary (NGO) satellite communications system, a low Earth orbit (LEO) satellite communications system, and/or the like. For example, without limitation, phased array antenna system 100 can comprise a satellite, a user terminal associated with user device(s), a gateway, a repeater, or other device capable of receiving and transmitting signals with another device of a satellite communications system.

Phased array antenna system 100 includes a modem 102, a digital beamformer (DBF) chip (referred to herein as DBF 104), a plurality of FEMs 106, and a plurality of antenna elements 108. Modem 102 electrically couples to one or more DBFs, such as, for example, DBF 104. DBF 104 electrically couples with a number, q, of corresponding series, or "daisy chains," of the plurality of FEMs 106. Each of the q daisy chains of FEMs 106 is referred to herein as an FEM series 110. Each FEM series 110 electrically couples serially with a number, n, of FEMs 106. Each DBF chip electrically coupled with modem 102 is similarly configured and associated with respective series of FEMs 106. DBF 104 may also be referred to as a DBF chip, a transmit/receive (Tx/Rx) DBF chip, a Tx/Rx chip, a transceiver, a DBF transceiver, and/or the like.

Each FEM 106 of the q FEM series 110 electrically couples with a respective subset of the plurality of antenna elements 108, e.g., M antenna elements 108. In some implementations, a same subset of antenna elements can be used for transmit and receive signal paths within phased array antenna system 100. As an example, without limitation, DBF 104 supports q FEM series 110, each supporting up to 4 FEMs 106 (e.g., n=4) and up to 16 antenna elements (M=16) of the plurality of antenna elements 108. Alternatively, DBF 104 may support more or fewer antenna elements without departing from the scope of the present disclosure.

In some cases, the phased array antenna system 100 includes a number, L, of DBFs 104. Each of the plurality of DBFs 104 may be electrically coupled to another in a daisy chain arrangement (not shown), i.e., the ith DBF of the plurality of DBFs 104 is electrically coupled with the (*i*th*+1*) DBF. For example, DBF 104 may be electrically coupled between modem 102 and a second DBF (not shown), and the second DBF may be electrically coupled between the first DBF and a third DBF (not shown), and so on.

DBF 104 includes an IC chip or IC chip package including a plurality of pins, in which at least a first subset of the plurality of pins is configured to communicate signals with its electrically coupled DBF chip(s) (and/or modem 102). In some implementations, a second subset of the plurality of pins of DBF 104 is configured to receive, for example, an LO signal (or reference clock signal) from a distribution network (not shown). The LO signal is generated by an LO (not shown). In certain embodiments, the LO is an integrated circuit (IC) chip. In some embodiments, the LO is included within a DBF, e.g., DBF 104. The LO signal is distributed to or within DBF 104. For example, the LO signal can be distributed within DBF 104 to mixers within DBF 104 to facilitate performance of frequency up-conversion to radio frequency (RF) signals to be transmitted and/or down-conversion of received RF signals. The LO may include, for example and without limitation, a transmit phase-locked loop (Tx PLL), a receive phase-locked loop (Rx PLL), a frequency multiplier, a multiplexer (MUX) for selecting between transmit and receiver, and/or a power amplifier (PA).

A third subset of the plurality of pins on the IC package of DBF 104 can be configured to transmit RF signals to and/or receive RF signals from FEMs 106 and antenna elements 108 connected to the FEMs 106. DBF 104, for example, includes a plurality of RF input/output (RFIO) channels 112. Each FEM series 110 is electrically coupled with one or more RFIO channels 112. Each FEM series 110 includes one or more, or n, serially fed FEMs 106. For example, a first FEM series 110 includes a first FEM 106 (e.g., FEM {1, 1}), a second FEM 106 (e.g., FEM{1, 2}), and so on up to an nth FEM 106 (e.g., FEM{1, n}). Each FEM 106 illustrated in FIG. 1 is annotated with a {row, column} designation, where the "row" designation indicates which FEM series 110 for DBF 104 a given FEM 106 belongs to (e.g., 1 to q), and the "column" designation indicates the position of a given FEM within an FEM series 110 (e.g., 1 to n). For example, FEM {2, 1} is the first FEM 106 in a second FEM series 110. Likewise, FEM {q, n} is the nth FEM 106 in a qth FEM series 110.

RFIO channels 112, when transmitting, are configured to feed an RF signal to their respective FEM series 110. The RF signal is the result of frequency up-conversion performed within DBF 104. The RF signal can be distributed to each FEM series 110 over an equal length signal path to minimize phase shift differences between signals arriving at the inputs of, for example, a first FEM series 110 and second FEM series 110. In some cases, phase shift differences between signals arriving at different FEM series 110 may result in phase errors in the RF signals provided to corresponding antenna elements 108 that emit the RF signals. Each FEM 106 may perform additional analog beamforming including, for example, phase shifting and/or amplification, before feeding each antenna element 108.

Referring again to the embodiment shown in FIG. 1, each of RFIO channels 112, when receiving, is configured to receive an RF signal from FEM series. The RF signal is received over the air at antenna elements 108 for each of the FEM series 110. Each FEM 106 may perform analog beamforming on the received RF signal, including, for example, phase shifting and/or amplification. In certain embodiments, each FEM 106 may also perform down-conversion to baseband or an intermediate frequency (IF). The RF (or IF or baseband) signals are then combined and propagated through the respective FEM series toward DBF 104 at RFIO channel 112. DBF 104, upon receipt of the RF signal, performs frequency down-conversion to a baseband or IF for further signal processing including, for example, analog to digital conversion.

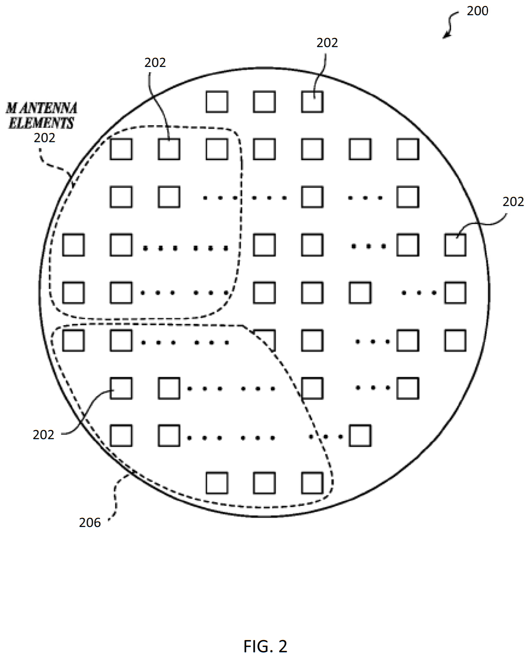

FIG. 2 is an example illustration of a top view of an antenna lattice 200 in accordance with some embodiments of the present disclosure. Antenna lattice 200 may be used, for example, in phased array antenna system 100. Antenna lattice 200 includes a plurality of antenna elements 202 arranged in a particular pattern to define a particular antenna aperture. In some cases, the antenna elements 202 can correspond to the plurality of antenna elements 108 shown in FIG. 1. The antenna aperture is the area through which power is radiated from and/or received by the plurality of antenna elements 202. Antenna lattice 200 defines a phased array antenna.

Referring to FIGS. 1 and 2, a subset 206 of the plurality of antenna elements 202 shown in FIG. 2 can form the M antenna elements 108 corresponding to a particular DBF 104. Additional subsets of antenna elements of the plurality of antenna elements 202 may be similarly associated with other DBFs.

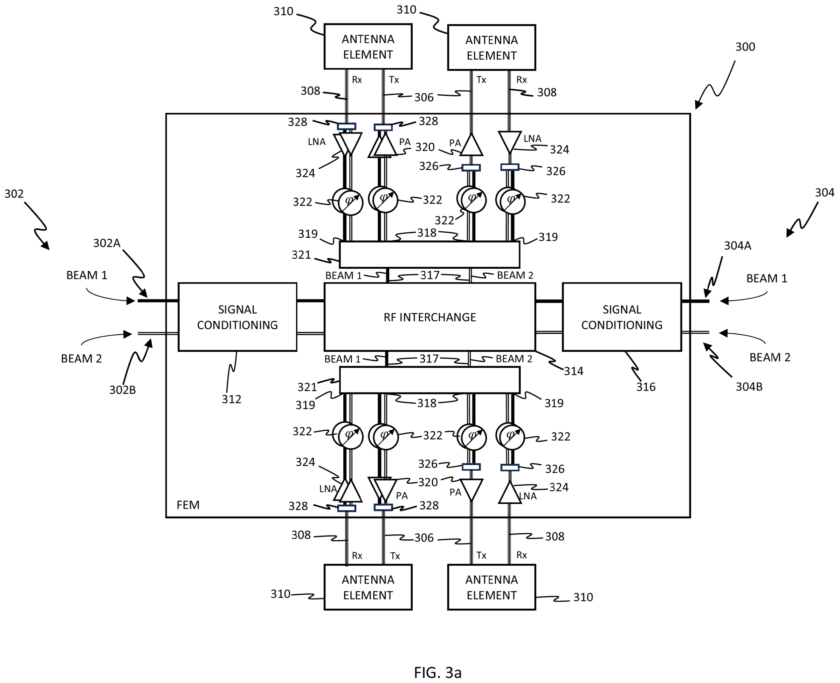

FIG. 3a is a functional block diagram of an example FEM 300 for use in a phased array antenna system such as phased array antenna system 100 shown in FIG. 1 or FEM 300 shown in FIG. 3a. For example, FEM 300 may be included in a serially fed chain of FEMs, such as FEM series 110 shown in FIG. 1. FEM 300 can assume any position within such a series, e.g., FEM 300 can be a first FEM in a serially fed chain, a last FEM in a serially fed chain, or FEM 300 can be any position in between. FEM 300 transmits and/or receives RF signals, or beams, on the serially fed chain via RF serial ports 302 and RF serial ports 304, which electrically couple FEM 300 with a prior or subsequent FEM in the series, or, e.g., a DBF such as DBF 104 shown in FIG. 1. Similarly, FEM 300 includes transmit (Tx) ports 306 and receive (Rx) ports 308 through which beams are communicated to and/or from a plurality of antenna elements 310. The plurality of antenna elements 310 can be similar to and perform similar functions to the plurality of antenna elements 108 shown in FIG. 1 or antenna elements 202 shown in FIG. 2.

RF serial ports 302A and 304A of FEM 300 can be coupled to opposing ends of a first RF channel (e.g., RF channel A). In a transmit (Tx) configuration RF channel A can be configured to propagate a first transmit (Tx) beam from RF serial port 302A to (i) RF serial port 304A and (ii) antenna elements 310 for transmission over the air. In a receive (Rx) configuration, channel A can be configured to combine signals of a first receive (Rx) beam from (i) antenna elements 310 and (ii) a serial RF signal received at RF serial port 304A from another FEM 300 and to output the combined signals to RF serial port 302A.

Signals propagating along RF channel A may receive signal conditioning at a signal conditioning stage 312 and/or at a signal conditioning stage 316. In some cases, the signal conditioning along channel A at signal conditioning stage 312 and/or signal conditioning stage 316 may include, without limitation, single-ended to differential conversion, differential to single-ended conversion, buffering, gain adjustment, phase shift, and/or any combination thereof. As illustrated in FIG. 3a, RF interchange 314 disposed along RF channel A can be used to distribute Tx signals corresponding to a first Tx beam to distribution ports 318 and/or to combine signals corresponding to the first Rx beam received at combination ports 319.

RF serial ports 302B and 304B of FEM 300 can be coupled to opposing ends of a second RF channel (e.g., RF channel B). In a transmit (Tx) configuration RF channel B can be configured to propagate a second transmit (Tx) beam from RF serial port 302B to (i) RF serial port 304B and (ii) antenna elements 310 for transmission over the air. In a receive (Rx) configuration, channel B can be configured to combine signals of a first receive (Rx) beam from (i) antenna elements 310 and (ii) a serial RF signal received at RF serial port 304B from another FEM 300 and to output the combined signals to RF serial port 302B.

Signals propagating along RF channel A may receive signal conditioning at a signal conditioning stage 312 and/or at a signal conditioning stage 316. In some cases, the signal conditioning along channel A at signal conditioning stage 312 and/or signal conditioning stage 316 may include, without limitation, single-ended to differential conversion, differential to single-ended conversion, buffering, gain adjustment, phase shift, and/or any combination thereof. As illustrated in FIG. 3a, RF interchange 314 disposed along RF channel B can be used to distribute Tx signals corresponding to a first Tx beam to distribution ports 318 and/or to combine signals corresponding to the first Rx beam received at combination ports 319.

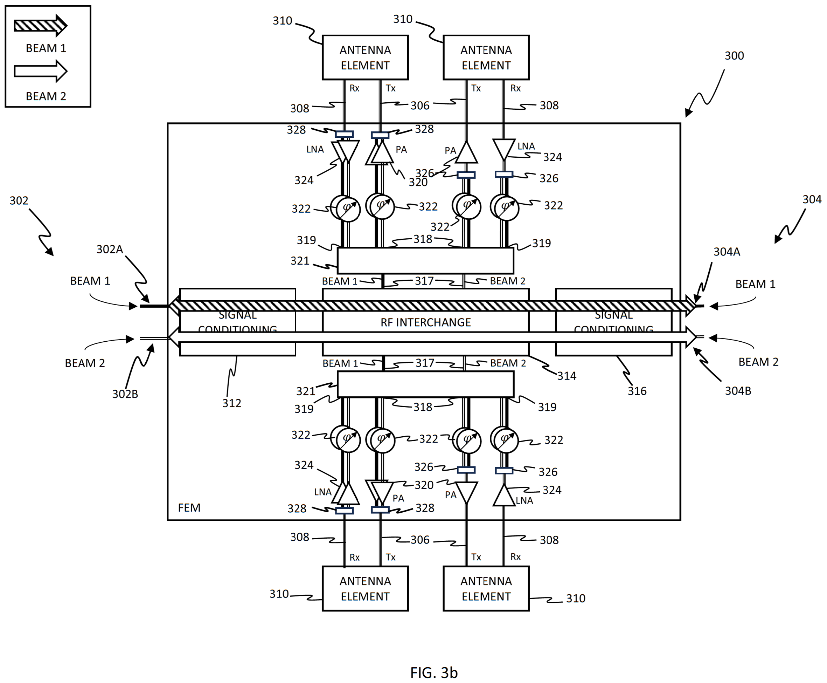

FIG. 3b illustrates an example signal flow through RF interchange 314 along the through-path, where RF signals are propagated bidirectionally between RF serial port 302A and RF serial port 304A, and between RF serial port 302B and RF serial port 304B.

RF serial ports 302 and 304, and RF channels A and B extending therebetween, antenna path ports 317, distribution ports 318, combination ports 319, beam 1 signal paths for each antenna element 310, beam 2 signal paths for each antenna elements 310 are illustrated in FIG. 3a each as differential ports and/or differential transmission lines. In some embodiments, RF serial ports 302 and 304, channels A and B extending therebetween, antenna path ports 317, distribution ports 318, combination ports 319, beam 1 signal paths for each antenna element 310, beam 2 signal paths for each antenna elements 310 and/or portions thereof can be implemented as single ended ports and/or single ended transmission lines. In some implementations, conversion from differential to single-ended signals and/or from single-ended to differential signals can be performed at any point along the signal paths within the FEM 300.

In the transmit (Tx) mode, RF interchange 314 can distribute respective RF signals received at RF serial port 302A and RF serial port 302B of FEM 300 and conditioned by signal conditioning stage 312 to respective antenna path ports 317 for beam 1 and beam 2, RF serial port 304A, and RF serial port 304B of FEM 300.

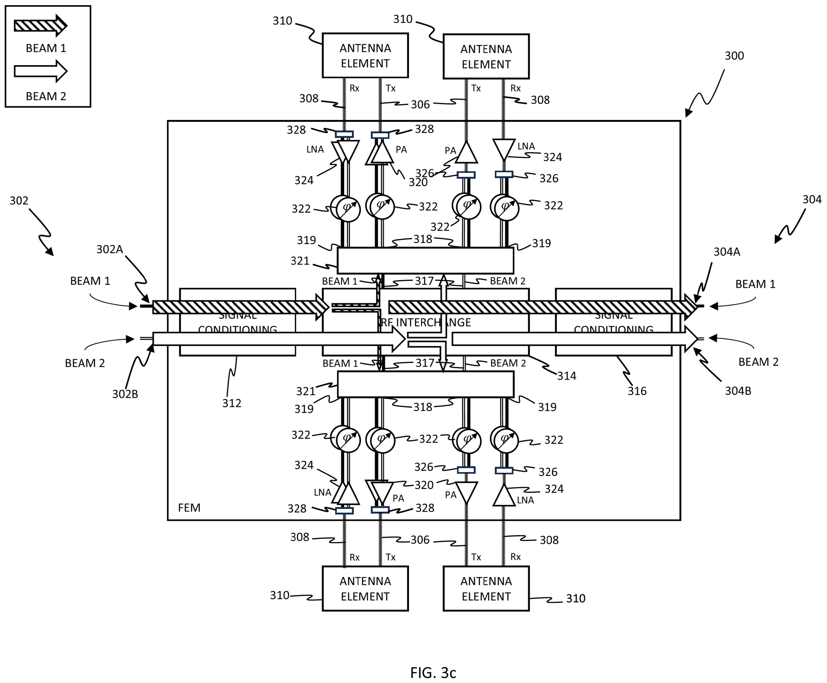

FIG. 3c, for example, illustrates an example signal flow through the RF interchange 314 in transmit mode, where a first RF signal, "beam 1," may be received at RF serial port 302A, propagate through signal conditioning stage 312, and enter RF interchange 314 for distribution. Likewise, for example, a second RF signal, "beam 2," may be received at RF serial port 302B, propagate through signal conditioning stage 312 separate from beam 1, and enter RF interchange 314 for distribution separate from beam 1.

In some cases, beam 1 and beam 2 are both distributed to respective beam 1 and beam 2 signal paths for each of antenna elements 310 through combiner/splitter network 321. As illustrated the combiner/splitter network 321 can couple the antenna path port 317 for beam 1 from the RF interchange 314 to two distribution ports 318 and two combination ports 319 associated with beam 1 signal paths. Similarly, the combiner/splitter network 321 can couple the antenna path port 317 for beam 2 from RF interchange 314 to two distribution ports 318 and two combination ports 319 associated with beam 2 signal paths.

For each antenna element 310, a distribution port 318 for beam 1 can couple beam 1 from the combiner/splitter network 321 to a phase shifter 322 in the corresponding beam 1 signal path. For each antenna element 310, the corresponding phase shifter 322 in the beam 1 signal path can apply a phase shift associated with a beam steering direction for beam 1.

Similarly, for each antenna element 310, a distribution port 318 for beam 2 can couple beam 2 from the combiner/splitter network 321 to a phase shifter 322 in the corresponding beam 2 signal path. For each antenna element 310, the corresponding phase shifter 322 in the beam 2 signal path can apply a phase shift associated with a beam steering direction for beam 2.

In some cases, the phase shifted beam 1 and beam 2 signals for a particular antenna element 310 propagate through a beam combiner/splitter 326 where they are combined into a composite RF signal prior to being amplified by a shared PA 320. In some examples, the phase shifted beam 1 is amplified by a PA 320 for beam 1 and the phase shifted beam 2 is amplified by a PA 320 for beam 2 before being combined into a composite RF signal at a combiner/splitter 328.

The composite RF signals can be transmitted over the air by each antenna element 310 In some implementations, the plurality of antenna elements 310 coupled to transmit (Tx) ports 306 emit, or radiate, the composite RF signals.

In the receive (Rx) mode, the RF interchange 314 combines respective RF signals received at RF serial port 304A and RF serial port 304B, and conditioned by the signal conditioning stage 316, with signals received over the air by each of the plurality of antenna elements 310.

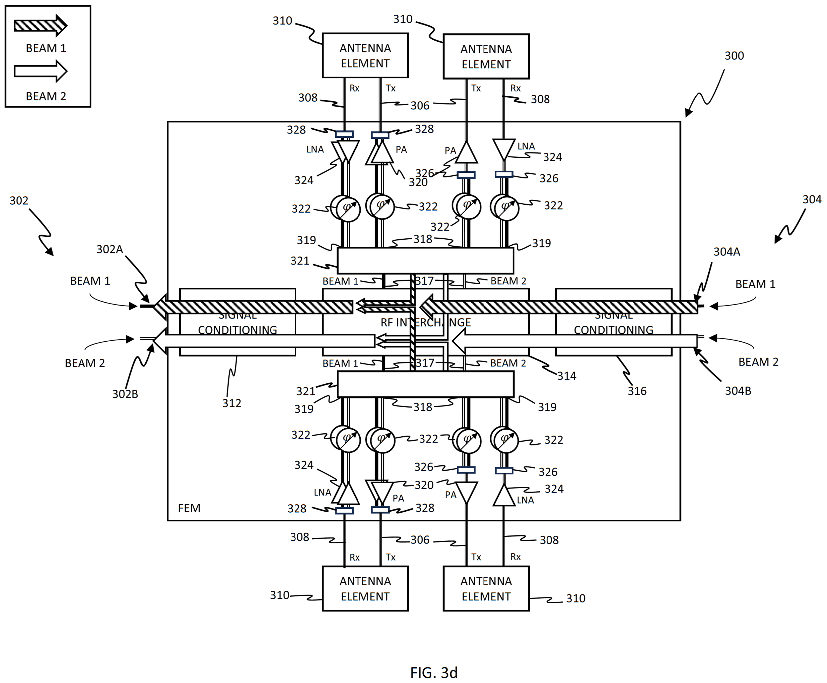

FIG. 3d illustrates an example signal flow in receive mode, where RF signals received over the air by antenna elements 310 can include multiple beams, e.g., beam 1 and beam 2.

In some implementations, the RF signal received by a particular antenna element 310 is routed from receive (Rx) ports 308 to a beam combiner/splitter 328, where the RF signal is split into a beam 1 signal and a beam 2 signal. The beam 1 signal can be routed to a beam 1 signal path and the beam 2 signal can be routed to a beam 2 signal path. As shown in FIG. 3d, each signal path can include a separate low noise amplifier (LNA) 324 associated with the corresponding beam 1 or beam 2. For each antenna element 310, a phase shifter 322 for the beam 1 signal path can apply a phase shift associated with the beam steering direction for beam 1 to the output of the LNA 324 for beam 1. Similarly, for each antenna element 310, a phase shifter 322 for the beam 2 signal path can apply a phase shift associated with the beam steering direction for beam 2 to the output of the LNA 324 for beam 2.

In some cases, the RF signal received by a particular antenna element is routed from receive (Rx) ports 308 to a shared LNA 324 for beam 1 and beam 2. The output of the shared LNA 324 can be coupled to a combiner/splitter 326, where the amplified RF signal is routed to respective phase shifters 322 for beam 1 and beam 2. For each antenna element 310, a phase shifter 322 for the beam 1 signal path can apply a phase shift associated with the beam steering direction for beam 1 to the beam 1 output of the combiner/splitter 326. Similarly, for each antenna element 310, a phase shifter 322 for the beam 2 signal path can apply a phase shift associated with the beam steering direction for beam 2 to the beam 2 output of the combiner/splitter 326.

As illustrated in FIG. 3d, the distribution/combination network 321 can combine beamformed beam 1 signals for two antenna elements 310 and couple the combined beam 1 signal from the antenna path port 317 for beam 1 to the RF interchange 314. Similarly, the distribution/combination network 321 can combine beamformed beam 2 signals for two antenna elements 310 and couple the combined beam 2 signal from the antenna port 317 for beam 2 to the RF interchange 314. In some cases, the RF interchange 314 can combine beamformed beam 1 signals from four antenna elements 310 with a through-path beam 1 signal received through RF serial port 304A. Similarly, the RF interchange 314 can combine beamformed beam 2 signals from four antenna elements 310 with a through-path beam 2 signal received through RF serial port 304B.

Although the Rx signal path, as illustrated in FIG. 3a, includes a single LNA 324 and a single phase shifter 322 coupled to each of the plurality of antenna elements 310, in some cases, a separate phase shifter 322 and/or LNA 324 can be coupled to each of the plurality of antenna elements 310 for each beam to be received. Similarly, the Tx signal path, as illustrated in FIG. 3a, includes a single phase shifter 322 and a single PA 320 coupled to each of the plurality of antenna elements 310. In some embodiments, a separate phase shifter 322 and/or PA 320 can be coupled to each of the plurality of antenna elements 310 for each beam to be transmitted.

Each time a beam, e.g., beam 1 or beam 2, is split or combined within RF interchange 314, the signal experiences power loss, e.g., 3 dB of loss. Signal conditioning stage 312 and signal conditioning stage 316, in certain example embodiments, may include components such as, for example, and without limitation, bidirectional buffers, additional LNAs, PAs, variable gain amplifiers (VGAs), transformers, and/or phase shifters (e.g., for Rx and/or Tx). In certain embodiments, the bidirectional buffers are active buffers to compensate for losses exhibited by transmission lines, e.g., within RF interchange 314 and for losses incurred when each beam is split or combined. Active buffers also can increase the isolation with the external environment (e.g., the rest of the phased array). FEM 300 can be configured, e.g., utilizing signal conditioning stages 312 and 316, to provide an equal gain among each of the plurality of antenna elements 310 and, furthermore, equal gain among multiple instances of FEM 300 connected in series, such as in FEM series 110 shown in FIG. 1.

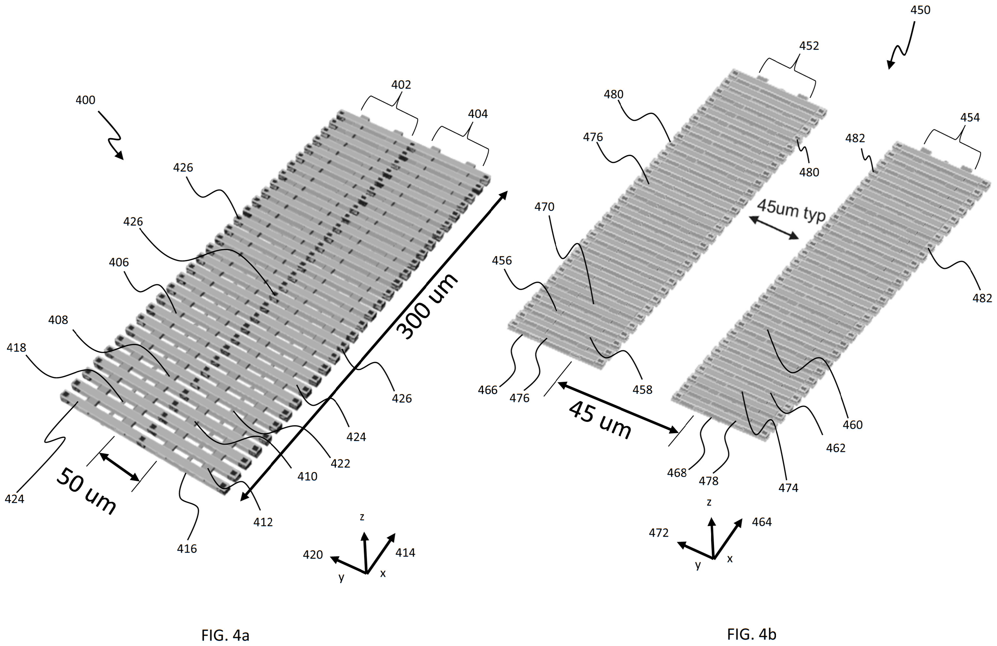

FIG. 4a is a perspective schematic diagram of one example dual beam differential transmission line 400 with local shielding in accordance with some examples of the present disclosure. Dual beam differential transmission line 400 may be formed as traces on a metal layer of an integrated circuit manufacturing process that utilizes multiple metal layers. The dual beam differential transmission line 400 includes two parallel differential transmission lines: differential transmission line 402 for a first beam and differential transmission line 404 for a second beam. Differential transmission line 402 and differential transmission line 404 each include a coupled pair of conductive traces (e.g., tungsten, aluminum, copper, and/or silver) Differential transmission line 402 includes a first trace 406 and a second trace 408. Likewise, differential transmission line 404 includes a third trace 410 and a fourth trace 412. Differential transmission lines 402 and 404 extend in a longitudinal dimension 414 and are each configured to propagate a respective RF signal, or beam, in either direction longitudinally.

Dual beam differential transmission line 400 includes a bottom layer of metal shield line segments 416 extending orthogonally beneath (e.g., on a lower metal layer of an integrated circuit manufacturing process) differential transmission line 402 and differential transmission line 404. Metal shield line segments 416 can be made of metal (e.g., tungsten, aluminum, copper, and/or silver) . Each of metal shield line segments 416 can be spaced apart along the longitudinal dimension 414 and electrically isolated from adjacent metal shield line segments 416, with the exception of a shield connection 418 on the same metal layer as the metal shield line segments 416 and positioned at a midpoint, in a lateral dimension 420, of differential transmission line 402 and a shield connection 422 on the same metal layer as metal shield line segments 416 and positioned at a midpoint, in the lateral dimension 420, of differential transmission line 404. Shield connection 418 and shield connection 422 extend longitudinally (e.g., along longitudinal dimension 414) in parallel with differential transmission line 402 and differential transmission line 404, and electrically bond each metal shield line segment 416 along the longitudinal dimension 414 only at the respective lateral midpoints of differential transmission line 402 and differential transmission line 404.

Dual beam differential transmission line 400 includes a top layer of metal shield line segments 424 extending orthogonally above (e.g., on a higher metal layer of an integrated circuit manufacturing process) differential transmission line 402 and differential transmission line 404. Each of metal shield line segments 424 can be spaced apart along the longitudinal dimension 414 from adjacent metal shield line segments 424. Each of metal shield line segments 424 is electrically bonded to a corresponding metal shield line segment 416 beneath differential transmission line 402 and differential transmission line 404 by stacked vias 426. Stacked vias 426 are conductive elements extending vertically between two or more layers to electrically couple the two or more layers. Stacked vias 426 are positioned at the distal ends of each metal shield line segment 416 and 424, and at a lateral midpoint between differential transmission line 402 and differential transmission line 404. Each corresponding pair of metal shield line segments 424 and metal shield line segments 416, electrically coupled by respective stacked vias 426, forms a single element of the local shield around differential transmission line 402 and/or differential transmission line 404. Shield connection 418 and shield connection 422 electrically couple the plurality of elements of the local shield formed by electrically coupled pairs of metal shield line segments 416 and metal shield line segments 424.

The orthogonal orientation of metal shield line segments 416 and metal shield line segments 424 relative to differential transmission line 402 and differential transmission line 404, and the limited electrical bonding of metal shield line segments 416 and metal shield line segments 424 along the longitudinal dimension 414, produce a local shield effect that yields strong isolation among RF signals propagating through dual beam differential transmission line 400, even when differential transmission line 402 and differential transmission line 404 are close together. For example, in the embodiment shown in FIG. 4a, differential transmission line 402 and differential transmission line 404 are separated (measured laterally from center-to-center of adjacent traces) by as few as 50 microns (um). Metal shield line segments 416 and metal shield line segments 424, and the electrical connections among them, yield signal isolation between differential transmission line 402 and differential transmission line 404 of 40 dB or more. Moreover, the local shielding and signal isolation provided by metal shield line segments 416 and metal shield line segments 424 enable placement of additional components on PCB layers beneath dual beam differential transmission line 400, including, for example and without limitation, digital components.

FIG. 4b is a perspective schematic diagram of another example dual beam differential transmission line 450 with local shield in accordance with some examples of the present disclosure. Dual beam differential transmission line 450 may be formed as traces on a metal layer of an integrated circuit manufacturing process that utilizes multiple metal layers. The dual beam differential transmission line 450 includes two parallel differential transmission lines: differential transmission line 452 for a first beam and differential transmission line 454 for a second beam. Differential transmission line 452 and differential transmission line 454 each include a coupled pair of conductive traces composed of, for example, copper. More specifically, differential transmission line 452 includes a first trace 456 and a second trace 458. Likewise, differential transmission line 454 includes a third trace 460 and a fourth trace 462. Differential transmission lines 452 and 454 extend in a longitudinal dimension 464 and are each configured to propagate a respective RF signal, or beam, in either direction longitudinally.

Dual beam differential transmission line 450 includes a bottom layer of metal shield line segments 466 extending orthogonally beneath differential transmission line 452, and metal shield line segments 468 extending orthogonally beneath differential transmission line 454. Metal shield line segments 466 and 468 are metal regions composed of, for example, copper. Metal shield line segments 466 are electrically isolated from metal shield line segments 468 and, generally, are electrically isolated from adjacent metal shield line segments 466, with the exception of a shield connection 470 positioned at a midpoint, in a lateral dimension 472, of differential transmission line 452. Shield connection 470 extends longitudinally in parallel with differential transmission line 452, and electrically bonds each metal shield line segment 466 along the longitudinal dimension 464 only at the respective lateral midpoints of differential transmission line 452. Metal shield line segments 468 are generally electrically isolated from adjacent metal shield line segments 468, with the exception of a shield connection 474 at a midpoint, in the lateral dimension 472, of differential transmission line 454. Shield connection 474 extends longitudinally in parallel with differential transmission line 454, and electrically bonds each metal shield line segment 468 along the longitudinal dimension 464 only at the respective lateral midpoints of differential transmission line 454.

Dual beam differential transmission line 450 includes a top layer of metal shield line segments 476 extending orthogonally above differential transmission line 452 and metal shield line segments 478 extending orthogonally above differential transmission line 454. Each of metal shield line segments 476 is electrically isolated from metal shield line segments 478 and adjacent metal shield line segments 476. Each of metal shield line segments 476 is electrically bonded to a corresponding metal shield line segment 466 beneath differential transmission line 452 by stacked vias 480. Stacked vias 480 are conductive elements extending vertically between two or more layers to electrically couple the two or more layers. Stacked vias 480 are positioned at the lateral ends of each metal shield line segment 466 and 476. Each of metal shield line segments 478 is electrically isolated from metal shield line segments 476 and adjacent metal shield line segments 478. Each of metal shield line segments 478 is electrically bonded to a corresponding metal shield line segment 468 beneath differential transmission line 454 by stacked vias 482. Stacked vias 482, like stacked vias 480, are conductive elements extending vertically between two or more layers to electrically couple the two or more layers. Stacked vias 482 are positioned at the lateral ends of each of metal shield line segments 468 and 478. Each corresponding pair of metal shield line segments 466 and metal shield line segments 476, electrically coupled by respective stacked vias 480, forms a single element of the local shield around differential transmission line 452. Shield connection 470 electrically couples the plurality of elements of the local shield formed by metal shield line segments 466 and metal shield line segments 476. Likewise, each corresponding pair of metal shield line segments 468 and metal shield line segments 478, electrically coupled by respective stacked vias 482, forms a single element of the local shield around differential transmission line 454. Shield connection 474 electrically couples the plurality of elements of the local shield formed by metal shield line segments 468 and metal shield line segments 478.

The orthogonal orientation of metal shield line segments 466 and metal shield line segments 476 relative to differential transmission line 452, and of metal shield line segments 468 and metal shield line segments 478 relative to differential transmission line 454, and the limited electrical bonding of metal shield line segments 466 and metal shield line segments 476, and of metal shield line segments 468 and metal shield line segments 478, along the longitudinal dimension 464, produce a local shield effect that yields strong isolation among RF signals propagating through dual beam differential transmission line 450, even when differential transmission line 452 and differential transmission line 454 are close together. For example, in the embodiment shown in FIG. 4b, differential transmission line 452 and differential transmission line 454 are separated (measured laterally from center-to-center of adjacent traces) by as few as 45 microns (um). Metal shield line segments 466, metal shield line segments 476, metal shield line segments 468, and metal shield line segments 478, and the electrical connections among them, yield signal isolation between differential transmission line 452 and differential transmission line 454 of 40 dB or more. Moreover, the local shielding and signal isolation provided by metal shield line segments 466, metal shield line segments 476, metal shield line segments 468, and metal shield line segments 478 enable placement of additional components on metal layers beneath dual beam differential transmission line 450, including, for example and without limitation, digital components.

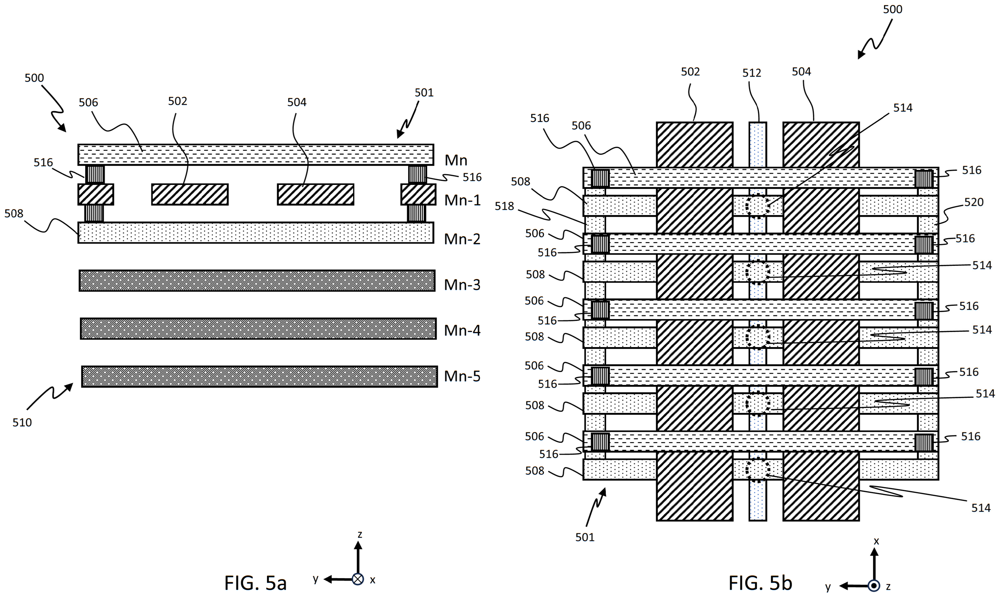

FIG. 5a is a cross-sectional diagram of one example differential transmission line 500 with a local shield 501 in accordance with some examples of the present disclosure. Differential transmission line 500 is embodied in an integrated circuit process having at least six metal layers. A top metal layer is designated as Mn, and each subsequent layer beneath top metal layer Mn is designated as Mn-1, Mn-2, and so on. Differential transmission line 500 is illustrated in FIG. 5a in a waveguide configuration, i.e., with a shield above and below the differential transmission line. Differential transmission line 500 includes a first trace 502 and a second trace 504 positioned in a second metal layer, Mn-1. A local shield 501 for differential transmission line 500 includes a top metal shield line segment 506 positioned in a first metal layer, Mn, and a bottom metal shield line segment 508 positioned in a third metal layer, Mn-2. Additional circuits 510, including, for example, passive and active components, may be positioned on metal layers Mn-3, Mn-4, and/or Mn-5.

FIG. 5b is a top view diagram of differential transmission line 500 shown in FIG. 5a. Portions of the layer stack are omitted, e.g., dielectric layers, to visualize the relevant metal layers. In particular, first trace 502 and second trace 504 are illustrated in FIG. 5b oriented vertically along the x-axis, or "north to south," and positioned in the second metal layer Mn-1. Top metal shield line segments 506 are oriented horizontally along the y-axis, or "east to west," orthogonal to and extending over first trace 502 and second trace 504, in the top metal layer Mn. Each of top metal shield line segments 506 is separated from adjacent top metal shield line segments 506 on top metal layer Mn. Bottom metal shield line segments 508 are also oriented along the y-axis east to west and orthogonal to first trace 502 and second trace 504, but extending beneath first trace 502 and second trace 504 in the third metal layer Mn-2. Each of bottom metal shield line segments 508 is connected by a shield connection 512 extending north to south along the x-axis on the third metal layer Mn-2 and electrically coupling each of bottom metal shield line segments 508 at lateral midpoints 514 relative to differential transmission line 500. Top metal shield line segments 506 are respectively electrically coupled to corresponding bottom metal shield line segments 508 by stacked vias 516, illustrated in FIG. 5a and 5b, coupling metal layers Mn, Mn-1, and Mn-2 at the locations of the stacked vias 516.

In certain embodiments, as shown in FIG. 5b, metal shield line segments 506 and metal shield line segments 508 are further electrically coupled by a first lateral shield connection 518 positioned at respective distal endpoints of metal shield line segments 506 and metal shield line segments 508 and extending parallel to first trace 502 and second trace 504, and a second lateral shield connection 520 positioned at respective endpoints of metal shield line segments 506 and metal shield line segments 508, at opposite distal endpoints of the metal shield line segments 506 and metal shield line segments 508 relative to first lateral shield connection 518. First lateral shield connection 518 and second lateral shield connection 520 can be disposed in metal layer Mn-2.

As shown in FIG. 5a, each corresponding pair of metal shield line segments 506 and metal shield line segments 508, electrically coupled by respective stacked vias 516, forms a single element of local shield 501 around differential transmission line 500. Shield connection 512 electrically couples the plurality of elements of local shield 501 formed by metal shield line segments 506 and metal shield line segments 508.

The orthogonal orientation of metal shield line segments 506 and metal shield line segments 508 relative to first trace 502 and second trace 504, and the limited electrical bonding of metal shield line segments 506 and metal shield line segments 508 north to south, produce a local shield effect that yields strong isolation among RF signals propagating through differential transmission line 500 and adjacent transmission lines.

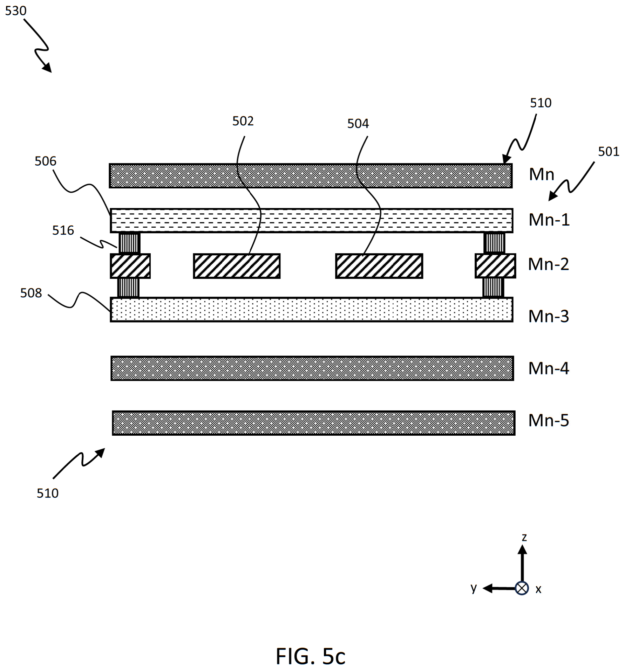

FIG. 5c is a cross-sectional diagram of a second example differential transmission line 530 with local shield 501 in accordance with some examples of the present disclosure. Differential transmission line 530 includes similar components and performs similar functions as differential transmission line 500 shown in FIG. 5a and FIG. 5b. Differential transmission line 530 may be formed as traces on a metal layer of an integrated circuit manufacturing process that utilizes multiple metal layers, as in the metal layer stackup shown in FIG. 5a and FIG. 5b. A top metal layer is designated as Mn, and each layer beneath is designated as Mn-1, Mn-2, and so on. Differential transmission line 530 is illustrated in FIG. 5c in a waveguide configuration, i.e., with a shield above and below the transmission line. In particular, second lateral shield connection 520 includes first trace 502 and second trace 504 positioned in a third metal layer, Mn-2. Local shield 501 includes top metal shield line segment 506 positioned in a second metal layer Mn-1, and bottom metal shield line segment 508 positioned in a fourth metal layer Mn-3. Additional circuits 510, including, for example, passive and active components, may be positioned on metal layers Mn, Mn-4, and Mn-5. Likewise, differential transmission line 530 can be positioned at any position within the "stack up" of metal layers.

Referring to the embodiment shown in FIG. 5c, similar to the embodiment shown in FIG. 5a and FIG. 5b, the orthogonal orientation of metal shield line segments 506 and metal shield line segments 508 relative to first trace 502 and second trace 504, and the limited electrical bonding of metal shield line segments 506 and metal shield line segments 508 north to south, produce a local shield effect that yields strong isolation among RF signals propagating through differential transmission line 530 and adjacent transmission lines.

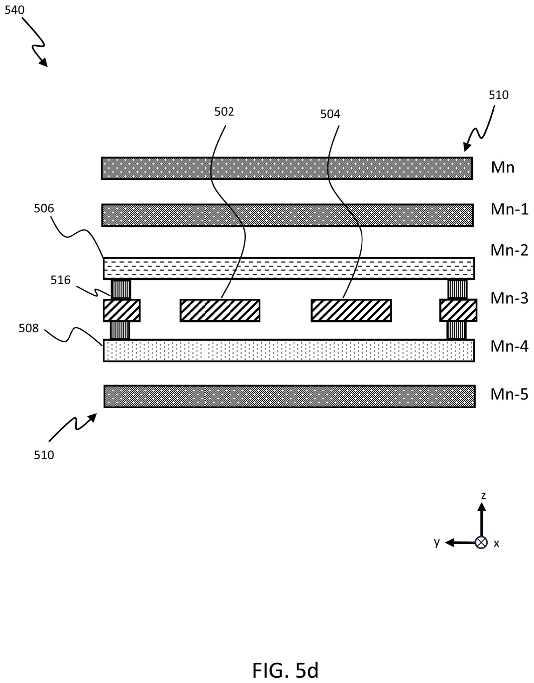

FIG. 5d is a cross-sectional diagram of a third example differential transmission line 540 with local shield 501 in accordance with some examples of the present disclosure. Differential transmission line 540 includes similar components and performs similar functions as differential transmission line 500 shown in FIG. 5a and FIG. 5b, and differential transmission line 530 shown in FIG. 5c. Differential transmission line 540 may be formed as traces on a metal layer of an integrated circuit manufacturing process that utilizes multiple metal layers, as in the metal layer stackup shown in FIGs. 5a-5c. A top metal layer is designated as Mn, and each layer beneath is designated as Mn-1, Mn-2, and so on. Differential transmission line 540 is illustrated in FIG. 5d in a waveguide configuration, i.e., with a shield above and below the transmission line. In particular, differential transmission line 540 includes first trace 502 and second trace 504 positioned in a fourth metal layer Mn-3. Local shield 501 includes top metal shield line segment 506 positioned in a third metal layer Mn-2, and bottom metal shield line segment 508 positioned in a fifth metal layer Mn-4. Additional circuits 510, including, for example, passive and active components, may be positioned on metal layers Mn, Mn-1, and Mn-5.

Referring to the embodiment shown in FIG. 5d, similar to the embodiments shown in FIG. 5a-5c, the orthogonal orientation of metal shield line segments 506 and metal shield line segments 508 relative to first trace 502 and second trace 504, and the limited electrical bonding of metal shield line segments 506 and metal shield line segments 508 north to south, produce a local shield effect that yields strong isolation among RF signals propagating through differential transmission line 540 and adjacent transmission lines.

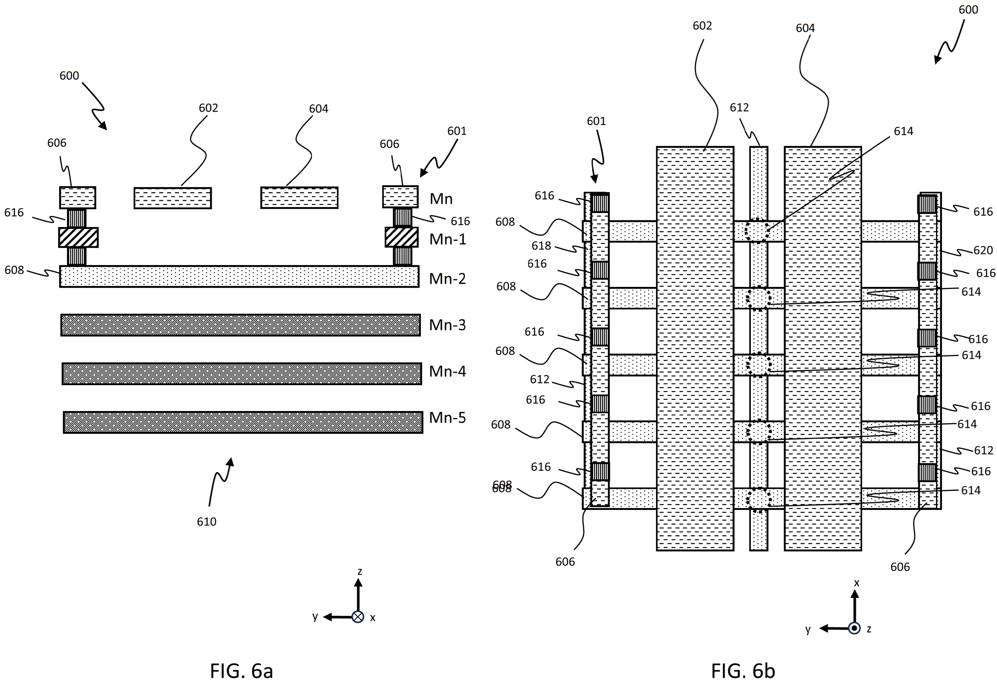

FIG. 6a is a cross-sectional diagram of a fourth example differential transmission line 600 with a local shield 601 in accordance with some examples of the present disclosure. Differential transmission line 600 may be formed as traces on a metal layer of an integrated circuit manufacturing process that utilizes multiple metal layers, as in the metal layer stackup shown in FIG. 6a. A top metal layer is designated as Mn, and each layer beneath is designated as Mn-1, Mn-2, and so on. Differential transmission line 600 is illustrated in FIG. 6a in a coplanar, or microstrip, configuration, i.e., with a shield below and coplanar with the transmission line. In particular, differential transmission line 600 includes a first trace 602 and a second trace 604 positioned in a first metal layer Mn. Local shield 601 corresponding with differential transmission line 600 includes a top metal shield line segment 606 positioned coplanar with first trace 602 and second trace 604 in the first metal layer Mn, and a bottom metal shield line segment 608 positioned in a third metal layer Mn-2. Additional circuits 610, including, for example, passive and active components, may be positioned on metal layers Mn-3, Mn-4, and Mn-5.

FIG. 6b is a top view diagram of differential transmission line 600 shown in FIG. 6a. Portions of the multilayer PCB are omitted, e.g., dielectric layers, to visualize the various metal layers. In particular, first trace 602 and second trace 604 are illustrated in FIG. 6b oriented vertically, or north to south, and positioned in the top metal layer Mn. Top metal shield line segments 606 are oriented north to south, in parallel with and coplanar with first trace 602 and second trace 604, in the top metal layer Mn. Each of top metal shield line segment 606 is electrically isolated from its opposite top metal shield line segment 606. Bottom metal shield line segments 608 are oriented horizontally, or east to west, and orthogonal to first trace 602 and second trace 604, but extending beneath first trace 602 and second trace 604 in the third metal layer Mn-2. Each of bottom metal shield line segments 608 is electrically coupled to adjacent bottom metal shield line segments 608 by shield connections 612 extending north to south on the third metal layer Mn-2, and electrically coupling each of bottom metal shield line segments 608 at lateral ends and at lateral midpoints 614 for differential transmission line 600. Top metal shield line segments 606 are electrically coupled to bottom metal shield line segments 608 by stacked vias 616, illustrated in FIG. 6a and 6b, coupling metal layers Mn, Mn-1, and Mn-2. In certain embodiments, as shown in FIG. 5b, metal shield line segments 606 and metal shield line segments 608 are further electrically coupled by a first lateral shield connection 618 positioned at an endpoint of metal shield line segments 606 and metal shield line segments 608 and extending parallel to first trace 602 and second trace 604, and a second lateral shield connection 620 positioned at another endpoint of metal shield line segments 606 and metal shield line segments 608, opposite first lateral shield connection 618. First lateral shield connection 618 and second lateral shield connection 620 are disposed in the third metal layer Mn-2.

As shown in FIG. 6a, each corresponding pair of metal shield line segments 606 and metal shield line segments 608, electrically coupled by respective stacked vias 616, forms a single element of local shield 601 around differential transmission line 600. Shield connection 612 electrically couples the plurality of elements of local shield 601 formed by metal shield line segments 606 and metal shield line segments 608.

The orthogonal orientation of bottom metal shield line segments 608 relative to first trace 602 and second trace 604, and the limited electrical bonding of bottom metal shield line segments 608 north to south, produce a local shield effect that yields strong isolation among RF signals propagating through differential transmission line 600 and adjacent transmission lines (not shown).

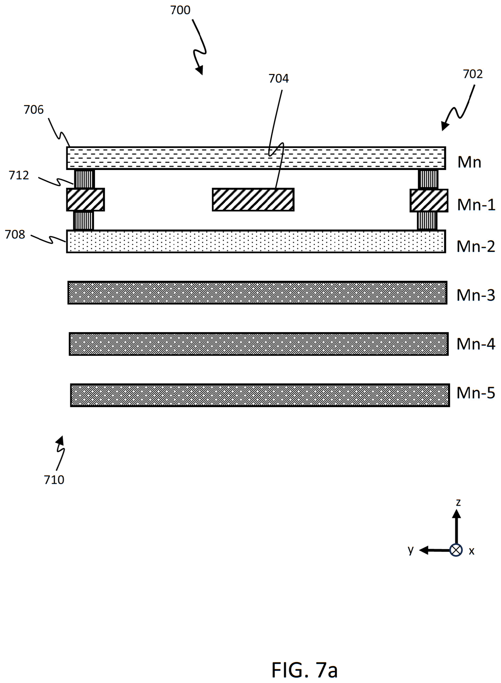

FIG. 7a is a cross-sectional diagram of a one example single ended transmission line 700 with a local shield 702 in accordance with some examples of the present disclosure. Single ended transmission line 700 may be formed as traces on a metal layer of an integrated circuit manufacturing process that utilizes, for example, six metal layers. A top metal layer is designated as Mn, and each layer beneath is designated as Mn-1, Mn-2, and so on. Single ended transmission line 700 is illustrated in FIG. 7a in a waveguide configuration, i.e., with a shield above and below the transmission line. In particular, single ended transmission line 700 includes a trace 704 positioned in a second metal layer Mn-1. Local shield 702 corresponding to single ended transmission line 700 includes a top metal shield line segment 706 positioned in a first metal layer Mn, and a bottom metal shield line segment 708 positioned in a third metal layer Mn-2. Additional circuits 710, including, for example, passive and active components, may be positioned on metal layers Mn-3, Mn-4, and Mn-5.

Top metal shield line segments 706 are oriented orthogonal to and extending over trace 704 in the top metal layer Mn. Each of top metal shield line segments 706 is electrically isolated from adjacent top metal shield line segments 706. Bottom metal shield line segments 708 are also oriented orthogonal to trace 704, but extending beneath trace 704 in the third metal layer Mn-2. Each of bottom metal shield line segments 708 is generally electrically isolated from adjacent bottom metal shield line segments 708, with the exception of a shield connection (not shown) extending parallel to trace 704 on the third metal layer Mn-2, and electrically coupling each of bottom metal shield line segments 708 at lateral midpoints (not shown) for single ended transmission line 700. Top metal shield line segments 706 are respectively electrically coupled to corresponding bottom metal shield line segments 708 by stacked vias 712, illustrated in FIG. 7a, coupling metal layers Mn, Mn-1, and Mn-2.

Each corresponding pair of top metal shield line segments 706 and bottom metal shield line segments 708, electrically coupled by respective stacked vias 712, forms a single element of local shield 702 around differential transmission line 700. A shield connection (not shown) electrically couples the plurality of elements of local shield 702 formed by top metal shield line segments 706 and bottom metal shield line segments 708.

The orthogonal orientation of metal shield line segments 706 and metal shield line segments 708 relative to trace 704 and the limited electrical bonding of metal shield line segments 706 and metal shield line segments 708 produce a local shield effect that yields strong isolation among RF signals propagating through differential transmission line 700 and adjacent transmission lines.

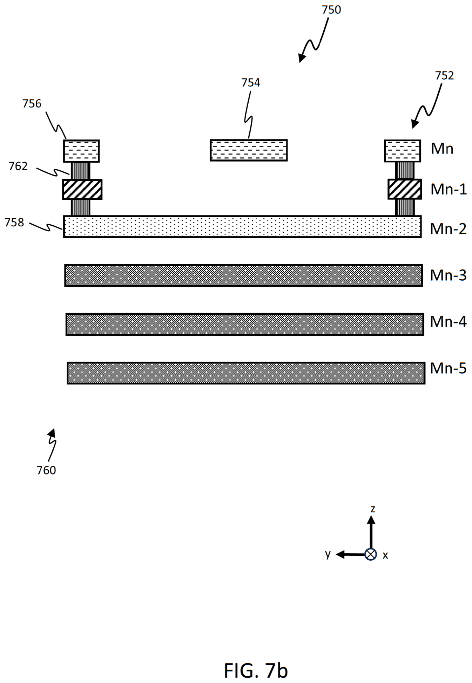

FIG. 7b is a cross-sectional diagram of another example single ended transmission line 750 with a local shield 752 in accordance with some examples of the present disclosure. Single ended transmission line 750 may be formed as traces on a metal layer of an integrated circuit manufacturing process that utilizes, for example, six metal layers. A top metal layer is designated as Mn, and each layer beneath is designated as Mn-1, Mn-2, and so on. Single ended transmission line 750 is similar to single ended transmission line 700, shown in FIG. 7a, and is illustrated in FIG. 7b in a coplanar, or microstrip, configuration, i.e., with a shield below and coplanar with the transmission line. In particular, single ended transmission line 750 includes a trace 754 positioned in a first metal layer Mn. Local shield 752 corresponding with single ended transmission line 750 includes a top metal shield line segment 756 positioned coplanar with trace 754 in the first metal layer Mn, and a bottom metal shield line segment 758 positioned in a third metal layer Mn-2. Additional circuits 760, including, for example, passive and active components, may be positioned on metal layers Mn-3, Mn-4, and Mn-5.

Top metal shield line segments 756 are oriented in parallel with and coplanar with trace 754, in the top metal layer Mn. Each of top metal shield line segment 756 is electrically isolated from its opposite top metal shield line segment 756. Bottom metal shield line segments 758 are oriented orthogonal to trace 754, but extending beneath trace 754 in the third metal layer Mn-2. Each of bottom metal shield line segments 758 is generally electrically isolated from adjacent bottom metal shield line segments 758, with the exception of a shield connection (not shown) extending parallel to trace 754 on the third metal layer Mn-2, and electrically coupling each of bottom metal shield line segments 758 at lateral midpoints (not shown) for single ended transmission line 750. Top metal shield line segments 756 are electrically coupled to bottom metal shield line segments 758 by stacked vias 762, illustrated in FIG. 7b, coupling metal layers Mn, Mn-1, and Mn-2.

Each corresponding pair of top metal shield line segment 756 and bottom metal shield line segments 758, electrically coupled by respective stacked vias 762, forms a single element of local shield 752 around differential transmission line 750. A shield connection (not shown) electrically couples the plurality of elements of local shield 752 formed by top metal shield line segments 756 and bottom metal shield line segments 758.

The orthogonal orientation of bottom metal shield line segments 758 relative to trace 754 and the limited electrical bonding of bottom metal shield line segments 758 produce a local shield effect that yields strong isolation among RF signals propagating through differential transmission line 750 and adjacent transmission lines (not shown).

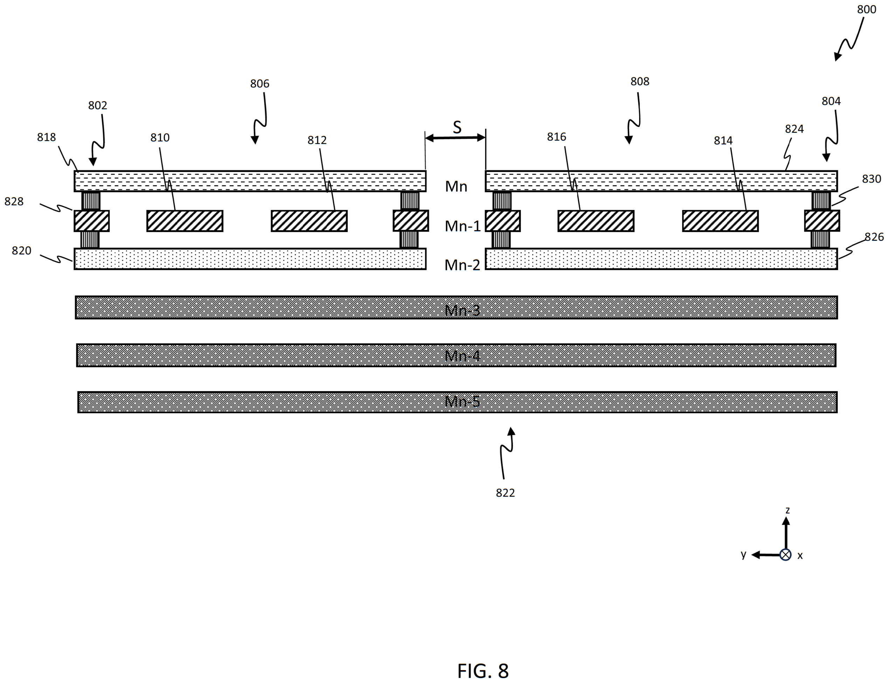

FIG. 8 is a cross-sectional diagram of one example dual beam differential transmission line 800 with a local shield 802 and a local shield 804 in accordance with some examples of the present disclosure. Dual beam differential transmission line 800 includes a pair of differential transmission lines, similar to differential transmission line 500 shown in FIG. 5a and 5b. Dual beam differential transmission line 800 may be formed as traces on a metal layer of an integrated circuit manufacturing process that utilizes, for example, six metal layers. A top metal layer is designated as Mn, and each layer beneath is designated as Mn-1, Mn-2, and so on. Dual beam differential transmission line 800 is illustrated in FIG. 8 in a waveguide configuration, i.e., with shields above and below the differential transmission lines. In particular, dual beam differential transmission line 800 includes a pair of differential transmission lines: differential transmission line 806 and differential transmission line 808. Differential transmission line 806 includes a first trace 810 and a second trace 812 positioned in a second metal layer Mn-1. Differential transmission line 808 includes a third trace 814 and a fourth trace 816 positioned in the second metal layer Mn-1.

Local shield 802 corresponding to differential transmission line 806 includes a top metal shield line segment 818 positioned in a first metal layer Mn, and a bottom metal shield line segment 820 positioned in a third metal layer Mn-2. Additional circuits 822, including, for example, passive and active components, may be positioned on metal layers Mn-3, Mn-4, and Mn-5.

Local shield 804 corresponding to differential transmission line 808 includes a top metal shield line segment 824 positioned in the first metal layer Mn, and a bottom metal shield line segment 826 positioned in the third metal layer Mn-2. Differential transmission line 808 extends in parallel with differential transmission line 806. Differential transmission line 806 and differential transmission line 808 are separated by a spacing distance, S. Spacing distance, S, may be, for example, 45 um, 50 um, or more. Top metal shield line segment 818 and top metal shield line segment 824 are electrically isolated within the first metal layer Mn. Likewise, bottom metal shield line segment 826 are electrically isolated within the third metal layer Mn-2.

Top metal shield line segments 818 and 824 are oriented orthogonal to and extend over first trace 810, second trace 812, third trace 814, and fourth trace 816 in the top metal layer Mn. Each of top metal shield line segments 818 and 824 is electrically isolated from adjacent top metal shield line segments 818 and 824, respectively. Bottom metal shield line segments 820 are also oriented orthogonal to first trace 810, second trace 812, third trace 814, and fourth trace 816, but extending beneath first trace 810, second trace 812, third trace 814, and fourth trace 816 in the third metal layer Mn-2. Each of bottom metal shield line segments 820 and 826 is generally electrically isolated from adjacent bottom metal shield line segments 820 and 826, respectively, with the exception of respective shield connections (not shown) extending parallel to differential transmission line 806 and differential transmission line 808 on the third metal layer Mn-2, and electrically coupling each of bottom metal shield line segments 820 and 826 at lateral midpoints (not shown) for differential transmission line 806 and 808, respectively. For example, such shield connections may be similar to shield connections 512 shown in FIG. 5a and FIG. 5b.

Referring again to the embodiment shown in FIG. 8, top metal shield line segments 818 are respectively electrically coupled to corresponding bottom metal shield line segments 820 by stacked vias 828, illustrated in FIG. 8, coupling metal layers Mn, Mn-1, and Mn-2 within differential transmission line 806. Likewise, top metal shield line segments 824 are respectively electrically coupled to corresponding bottom metal shield line segment 826 by stacked vias 830, coupling metal layers Mn, Mn-1, and Mn-2 within differential transmission line 808.

Each corresponding pair of top metal shield line segments 818 and bottom metal shield line segments 820, electrically coupled by respective stacked vias 828, forms a single element of local shield 802 around differential transmission line 806. A shield connection (not shown) electrically couples the plurality of elements of local shield 802 formed by top metal shield line segments 818 and bottom metal shield line segments 820. Likewise, each corresponding pair of top metal shield line segments 824 and bottom metal shield line segment 826, electrically coupled by respective stacked vias 830, forms a single element of local shield 804 around differential transmission line 808. A shield connection (not shown) electrically couples the plurality of elements of local shield 804 formed by top metal shield line segments 824 and bottom metal shield line segment 826.

The orthogonal orientation of top metal shield line segments 818, bottom metal shield line segments 820, top metal shield line segments 824, and bottom metal shield line segment 826 relative to first trace 810, second trace 812, third trace 814, and fourth trace 816, and the limited electrical bonding of top metal shield line segments 818 to bottom metal shield line segments 820, and of top metal shield line segments 824 to bottom metal shield line segment 826, produce a local shield effect for each of differential transmission line 806 and differential transmission line 808 that yields strong isolation among RF signals propagating through differential transmission line 806 and differential transmission line 808.

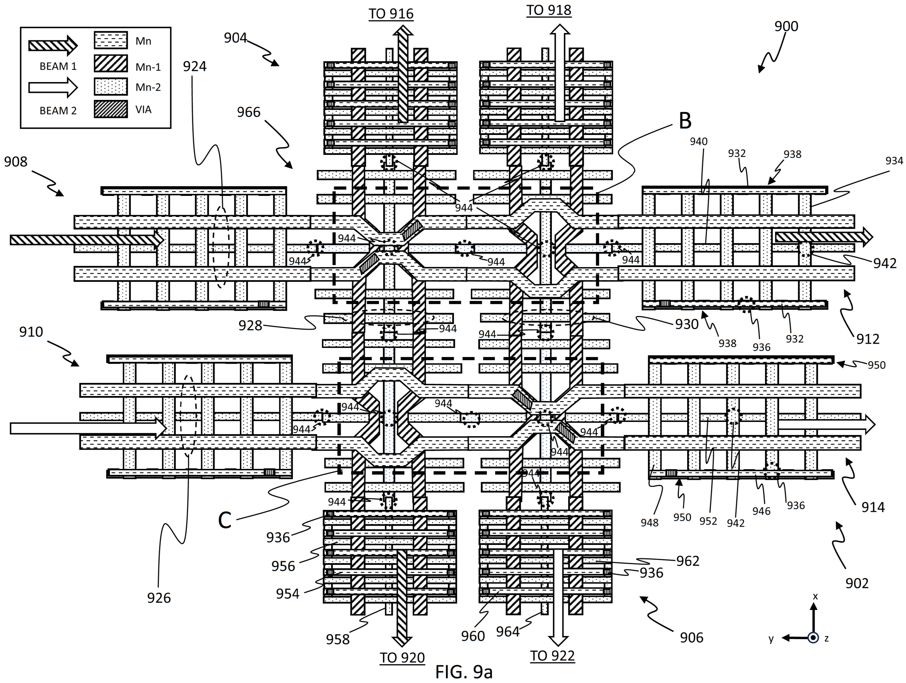

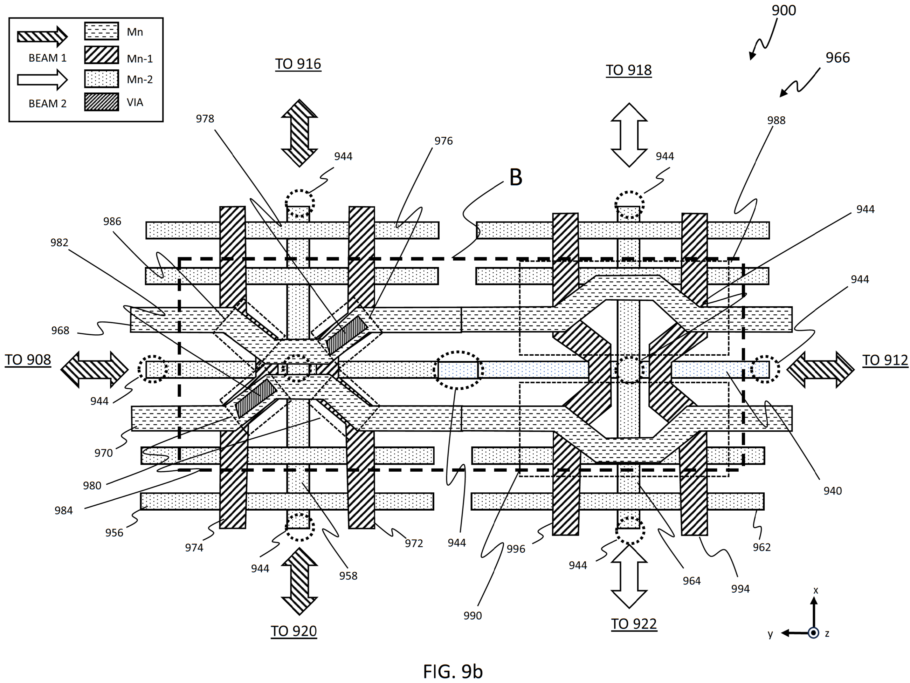

FIG. 9a and FIG. 9b illustrate the distribution and combination of signals among serial distribution ports 908 and 910, distribution/combination ports 916, 918, 920, and 922, and serial feed-through ports 912 and 914 by dual beam RF interchange 900. In some cases, coupling between different transmission lines within the dual beam RF interchange 900 is performed within a crossing section 966, a portion of which is designated as section B in FIG. 9a and expanded on in FIG. 9b.

FIG. 9a is a top view diagram of one example of a dual beam differential RF interchange 900 in accordance with some examples of the present disclosure. Dual beam differential RF interchange 900 is configured to distribute two differential signals, e.g., beam 1 and beam 2, for transmission over a channel, such as over the air, to three pathways, and/or to combine two signals received over the channel from the three pathways. The first pathway is a feed-through pathway 902 that couples with a feed-through channel; the second pathway is a north pathway 904; and the third pathway is a south pathway 906. Signals are supplied to dual beam RF interchange 900 for transmission (and/or combined and output from dual beam RF interchange 900 when receiving) through serial distribution ports 908 and 910 that couple to a serial distribution channel. Feed-through pathway 902 includes serial feed-through ports 912 and 914 serially coupled with serial distribution ports 908 and 910, respectively. For example, beam 1 coupled into serial distribution port 908 propagates through dual beam RF interchange 900 serially to serial feed-through port 912, and vice versa for a received signal coupled into feed-through port 912. Likewise, beam 2 coupled into serial distribution port 910 propagates through dual beam RF interchange 900 serially to serial feed-through port 914, and vice versa for a received signal coupled into serial feed-through ports 912. North pathway 904 includes distribution/combination port 916 and distribution/combination port 918, and south pathway 906 includes distribution/combination port 920 and distribution/combination port 922.

North pathway 904 and south pathway 906 each couple to one or more analog beam forming components and/or one or more antenna elements. Dual beam RF interchange 900 couples north pathway 904 and south pathway 906 to a transmission line 924 extending from serial distribution port 908 to serial feed-through port 912 and a transmission line 926 extending from serial distribution port 910 to serial feed-through port 914. More specifically, for example, beam 1, for transmission over the air, propagating on transmission line 924, is coupled into distribution/combination port 916 of north pathway 904 and distribution/combination port 920 of south pathway 906. Likewise, for example, beam 2, for transmission over the air, propagating on transmission line 926, is coupled into distribution/combination port 918 of north pathway 904 and distribution/combination port 922 of south pathway 906.

When receiving, for example, beam 1 is received over a channel and coupled into dual beam RF interchange 900 via distribution/combination port 916 and distribution/combination port 920, and propagates on a transmission line 928 extending between distribution/combination port 916 and distribution/combination port 920. Likewise, beam 2, received over the channel and coupled into dual beam RF interchange 900 via distribution/combination port 918 and distribution/combination port 922, propagates on a transmission line 930 extending between distribution/combination port 918 and distribution/combination port 922. Dual beam RF interchange 900 couples beam 1 propagating on differential transmission line 928 into differential transmission line 924, and couples beam 2 propagating on differential transmission line 930 into differential transmission line 926. Notably, transmission line 924 exhibits good signal isolation despite crossing over transmission line 930, and transmission line 926 exhibits good signal isolation despite crossing over transmission line 928. For example, in certain embodiments, crossing isolation may be -65 dB or better. Similarly, transmission line 924 and transmission line 926 exhibit good side-by-side signal isolation, i.e., signal isolation between beam 1 and beam 2. Similarly, transmission line 928 and transmission line 930 exhibit good side-by-side signal isolation. For example, in certain embodiments, beam 1 and beam 2 exhibit -50 dB isolation side-by-side or better within dual beam RF interchange 900. In some cases, the dual beam RF interchange 900 may exhibit -40 dB isolation or better in the aggregate from different coupling sources including at least side-by-side isolation and crossing isolation.

In the embodiment shown in FIG. 9a, dual beam RF interchange 900 employs differential transmission lines for transmission line 924, transmission line 926, transmission line 928, and transmission line 930. Each differential transmission line is locally shielded, for example, in a microstrip or coplanar configuration, similar to differential transmission line 500 shown in FIGS. 5a and 5b, or a waveguide configuration, similar to differential transmission line 600 shown in FIGS. 6a and 6b. The orthogonal orientation of top and bottom metal shield line segments relative to respective traces of transmission line 924, transmission line 926, transmission line 928, and transmission line 930, and limited electrical bonding of adjacent bottom metal shield line segments and corresponding top metal shield line segments produce a local shield effect that yields strong isolation among RF signals propagating through transmission line 924, transmission line 926, transmission line 928, and transmission line 930.

More specifically, transmission line 924 is implemented in a microstrip, or coplanar, configuration in which traces of transmission line 924 are coplanar with and extend parallel to top metal shield line segments 932 in a first metal layer e.g., Mn. Bottom metal shield line segments 934 are oriented orthogonal to transmission line 924 in a third metal layer e.g., Mn-2, below transmission line 924. Top metal shield line segments 932 are electrically coupled to bottom metal shield line segments 934 at stacked vias 936 distributed along the length of top metal shield line segments 932 and extending from the first metal layer through a second metal layer e.g., Mn-1, and to the third metal layer e.g., from Mn to Mn-2. Bottom metal shield line segments 934 are electrically coupled to each other by lateral shield connections 938 extending below and parallel to each of top metal shield line segments 932 within the third metal layer Mn-2. Bottom metal shield line segments 934 are also electrically coupled to each other by a shield connection 940 extending within the third metal layer Mn-2, parallel to transmission line 924 and coupling to each bottom metal shield line segments 934 at lateral midpoints 942 of transmission line 924. Shield connection 940 also electrically couples various sections of local shielding for transmission line 924 at shield bonding points 944.

Transmission line 926 is implemented, like transmission line 924, in a microstrip, or coplanar, configuration in which traces of transmission line 926 are coplanar with and extend parallel to top metal shield line segments 946 in the first metal layer Mn. Bottom metal shield line segments 948 are oriented orthogonal to transmission line 926 in the third metal layer Mn-2, below transmission line 926. Top metal shield line segments 946 are electrically coupled to bottom metal shield line segments 948 at stacked vias 936 distributed along the length of top metal shield line segments 946 and extending from the first metal layer through a second metal layer e.g., Mn-1, and to the third metal layer e.g., from Mn to Mn-2. Bottom metal shield line segments 948 are electrically coupled to each other by lateral shield connections 950 extending below and parallel to each of top metal shield line segments 946 within the third metal layer Mn-2. Bottom metal shield line segments 948 are also electrically coupled to each other by a shield connection 952 extending within the third metal layer Mn-2, parallel to transmission line 926 and coupling to each bottom metal shield line segments 948 at lateral midpoints 942 of transmission line 926. Shield connection 952 also electrically couples various sections of local shielding for transmission line 926 at shield bonding points 944.

Transmission line 928 is implemented, at distribution/combination port 916 and distribution/combination port 920, in a waveguide configuration in which traces of transmission line 928 are positioned on the second metal layer Mn-1, below top metal shield line segments 954 on the first metal layer Mn, and above bottom metal shield line segments 956 on the third metal layer Mn-2. Top metal shield line segments 954 and bottom metal shield line segments 956 each extend orthogonal to transmission line 928 within their respective metal layers. Top metal shield line segments 954 are generally electrically isolated from adjacent top metal shield line segments 954. Likewise, bottom metal shield line segments 956 are generally electrically isolated from adjacent bottom metal shield line segments 956, with the exception of a shield connection 958 extending parallel to transmission line 928 within the third metal layer Mn-2. Shield connection 958 also electrically couples various sections of local shielding for transmission line 928 at shield bonding points 944. Top metal shield line segments 954 are electrically coupled to bottom metal shield line segments 956 at respective stacked vias 936 extending from top metal shield line segments 954 in the top metal layer Mn, to corresponding bottom metal shield line segments 956 in the third metal layer Mn-2.

Transmission line 930 is implemented, at distribution/combination port 918 and distribution/combination port 922, in a waveguide configuration in which traces of transmission line 930 are positioned on the second metal layer Mn-1, below top metal shield line segments 960 on the first metal layer Mn, and above bottom metal shield line segments 962 on the third metal layer Mn-2. Top metal shield line segments 960 and bottom metal shield line segments 962 each extend orthogonal to transmission line 930 within their respective metal layers. Top metal shield line segments 960 are generally electrically isolated from adjacent top metal shield line segments 960. Likewise, bottom metal shield line segments 962 are generally electrically isolated from adjacent bottom metal shield line segments 962, with the exception of a shield connection 964 extending parallel to transmission line 930 within the third metal layer Mn-2. Shield connection 964 also electrically couples various sections of local shielding for transmission line 930 at shield bonding points 944. Top metal shield line segments 960 are electrically coupled to bottom metal shield line segments 962 at respective stacked vias 936 extending from top metal shield line segments 960 in the top metal layer Mn, to corresponding bottom metal shield line segments 962 in the third metal layer Mn-2.

FIG. 9b is a top view diagram of section B of dual beam RF interchange 900 configured to distribute beam 1 for transmission over the air and/or combine beam 1 received over the air. As illustrated in FIG. 9b, crossing section 966 includes a portion of the differential transmission line 924 travelling east to west. Crossing section 966 includes a portion of the differential transmission line 924 shown as trace 968 and trace 970 in a differential pair on the first metal layer Mn. Trace 968 is sometimes referred to as a positive trace in the differential pair; and trace 970 is sometimes referred to as a negative trace in the differential pair. The signal propagating on trace 970 is transmitted with an opposite polarity (i.e., 180 degrees phase shift, or "negative") relative to the signal propagating on trace 968. However, the polarity of the signals on the trade 968 and 970 may be reversed without departing from the scope of the present disclosure. The differential transmission line 924 is configured to propagate signals, e.g., beam 1, from serial distribution port 908 to serial feed-through port 912 when transmitting, and/or propagate signals, e.g., beam 1, from serial feed-through port 912 to serial distribution port 908 when receiving.

Crossing section 966 electrically couples, north to south (i.e., vertically in FIG. 9b), includes a portion of differential transmission line 928. Crossing section 966 may also be referred to as the beam 1 crossing section 966, which is then mirrored to implement a beam 2 crossing section (not shown). Accordingly, when crossing section 966 is described as electrically coupling to transmission line 928, distribution/combination port 920, transmission line 930, and distribution/combination port 922, the electrical coupling is made through the additional crossing section and toward transmission line 928, distribution/combination port 920, transmission line 930, and distribution/combination port 922. Transmission line 928 includes a trace 972 and a trace 974 in a differential pair on the second metal layer Mn-1. Trace 972 is sometimes referred to as a positive trace in the differential pair; and trace 974 is sometimes referred to as a negative trace. For a given time reference, the signal propagating on trace 974 is transmitted with an opposite polarity (i.e., 180 degrees phase shift, or "negative") relative to the signal propagating on trace 972. The propagating signals are otherwise the same. The differential pair is configured to propagate signals, e.g., beam 1, to and from distribution/combination port 916 and to and from distribution/combination port 920.

Trace 972, extending north to south on the second metal layer Mn-1, crosses trace 968 and trace 970, extending east to west on the first metal layer Mn. Trace 972 crosses trace 968 at a coupling region 976 in which trace 972 is canted, or diverges inward, i.e., toward its complementary trace, trace 974, within the second metal layer Mn-1, at an approximately 45 degree angle. Likewise, within coupling region 976, trace 968 is canted, or diverges inward, i.e., toward its complementary trace, trace 970, within the first metal layer Mn, at an approximately 45 degree angle such that trace 972 and trace 968 are parallel and overlapping within coupling region 976. The proximity and relative orientation of trace 972 and trace 968 within coupling region 976 is configured to produce electromagnetic coupling of signals propagating on trace 972 or trace 968, and in either direction. Furthermore, in the embodiment shown in FIG. 9a and FIG. 9b, a via 978 electrically couples trace 972 and trace 968 within coupling region 976, strengthening the coupling.

Trace 972 crosses trace 970 at a coupling region 984 in which trace 972 is canted, or diverges inward, i.e., toward trace 974, within the second metal layer Mn-1, at an approximately 45 degree angle. Likewise, within coupling region 984, trace 970 is canted, or diverges inward, i.e., toward trace 968, within the first metal layer Mn, at an approximately 45 degree angle such that trace 972 and trace 970 are parallel and overlapping within coupling region 984. Although the proximity and relative orientation of trace 972 and trace 970 within coupling region 984 is configured to produce electromagnetic coupling between trace 972 (having positive polarity) and trace 970 (having negative polarity), signals propagating on trace 972 and trace 970 are generally 180 degrees out of phase with respect to each other. Consequently, the signals are not significantly impacted by the coupling.

Similarly, trace 974, extending north to south on the second metal layer Mn-1, crosses trace 968 and trace 970, extending east to west on the first metal layer Mn. Trace 974 crosses trace 970 at a coupling region 980 in which trace 974 diverges inward, i.e., toward its complementary trace, trace 972, within the second metal layer Mn-1, at an approximately 45 degree angle. Likewise, within coupling region 980, trace 970 diverges inward, i.e., toward its complementary trace, trace 968, within the first metal layer Mn, at an approximately 45 degree angle such that trace 974 and trace 970 are parallel and overlapping within coupling region 980. The proximity and relative orientation of trace 974 and trace 970 within coupling region 980 is configured to produce electromagnetic coupling of signals propagating on trace 974 or trace 970, and in either direction. Furthermore, in the embodiment shown in FIG. 9a and FIG. 9b, a via 982 electrically couples trace 974 and trace 970 within coupling region 980, strengthening the coupling.

Trace 974 crosses trace 968 at a coupling region 986 in which trace 974 is canted, or diverges inward, i.e., toward trace 972, within the second metal layer Mn-1, at an approximately 45 degree angle. Likewise, within coupling region 986, trace 968 is canted, or diverges inward, i.e., toward trace 970, within the first metal layer Mn, at an approximately 45 degree angle such that trace 974 and trace 968 are parallel and overlapping within coupling region 986. Although the proximity and relative orientation of trace 974 and trace 968 within coupling region 986 is configured to produce electromagnetic coupling between trace 974 (having negative polarity) and trace 968 (having positive polarity), signals propagating on trace 974 and trace 968 are generally 180 degrees out of phase with respect to each other. Consequently, the signals are not significantly impacted by the coupling.

Trace 968, trace 970, trace 972, and trace 974 each resumes a parallel orientation with respect to its complimentary trace between coupling regions. More specifically, trace 968 and trace 970 resume a parallel orientation between coupling region 976 and coupling region 986, and between coupling region 984 and coupling region 980, respectively. Likewise, trace 972 and trace 974 resume a parallel orientation between coupling region 976 and coupling region 984, and between coupling region 986 and coupling region 980, respectively.

As trace 968, trace 970, trace 972, and trace 974 intersect within crossing section 966, the respective local shields for transmission line 924 and transmission line 928 also converge. More specifically, shield connection 940 and shield connection 958 are electrically coupled at a shield bonding point 944 at a geometric center of the intersection of transmission line 924 and transmission line 928. Likewise, shield connection 952 corresponding to transmission line 926 and shield connection 964 corresponding to transmission line 930 are electrically coupled at a shielding bonding point 944 at a geometric center of the intersection of transmission line 926 and transmission line 930.

When transmitting, coupling regions 976, 980, 984, and 986 enable a signal, e.g., beam 1, for transmission over the channel propagating from serial distribution port 908 on transmission line 924, i.e., the differential pair of trace 968 and trace 970, to couple onto transmission line 928 for north and south distribution to distribution/combination port 916 and distribution/combination port 920, respectively. More specifically, the positive signal propagating on trace 968 couples onto trace 972, and its counterpart, or negative, signal propagating on trace 970 couples onto trace 974.

When receiving, coupling regions 976, 980, 984, and 986 enable a signal, e.g., beam 1, received over the air and propagating on transmission line 928, i.e., the differential pair of trace 972 and trace 974, from distribution/combination port 916 and distribution/combination port 920, i.e., to couple onto transmission line 924 for combination and routing to serial distribution port 908. More specifically, the positive signal propagating on trace 972 couples onto trace 968, and its counterpart, or negative, signal propagating on trace 974 couples onto trace 970.

Moreover, when transmitting, the signal, e.g., beam 1, propagates west to east along trace 968 and trace 970 of transmission line 924 toward serial feed-through port 912, or east to west from serial feed-through port 912 when receiving. Transmission line 924 crosses transmission line 930 at an isolation region 988 and an isolation region 990. Transmission line 930 includes a trace 994 and a trace 996 in a differential pair on the second metal layer Mn-1. Trace 994 is sometimes referred to as a positive trace in the differential pair; and trace 996 is sometimes referred to as a negative trace. For a given time reference, the signal propagating on trace 994 is transmitted with an opposite polarity (i.e., 180 degrees phase shift, or "negative") relative to the signal propagating on trace 996. The propagating signals are otherwise the same. The differential pair is configured to propagate signals to and from distribution/combination port 918 and to and from distribution/combination port 922. Generally, transmission line 930 propagates another signal, e.g., beam 2, that should be electrically isolated from beam 1. Accordingly, within isolation regions 988 and 990 trace 968, trace 970, trace 994, and trace 996 cant and cross in a manner to prevent coupling. For example, in the embodiment shown in FIG. 9b, trace 968 and trace 970, generally extending in parallel, cant approximately 45 degrees away from each other, return to parallel, and then converge again on their original parallel path. Similarly, trace 994 and trace 996, generally extending in parallel, cant approximately 45 degrees away from each other, return to parallel, and then converge again on their original parallel path. Crossings among trace 968 and traces 994 and 996, and crossings among trace 970 and traces 994 and 996, are orthogonal to avoid signal coupling between transmission line 924 and transmission line 930.

As trace 968, trace 970, trace 994, and trace 996 intersect within crossing section 966, the respective local shields for transmission line 924 and transmission line 930 also converge. More specifically, shield connection 940 and shield connection 964 are electrically coupled at a shield bonding point 944 at a geometric center of the intersection of transmission line 924 and transmission line 930. Likewise, shield connection 952 corresponding to transmission line 926 and shield connection 958 corresponding to transmission line 928 are electrically coupled at a shielding bonding point 944 at a geometric center of the intersection of transmission line 926 and transmission line 928.

When transmitting, beam 2 propagates on transmission line 926 (shown in FIG. 9a) and couples onto transmission line 930 for distribution north and south to distribution/combination port 918 and distribution/combination port 922, respectively. Referring again to FIG. 9b, beam 2 propagates on trace 994 and trace 996 from south to north toward distribution/combination port 918. Likewise, when receiving, beam 2 propagates on transmission line 930 and couples onto transmission line 926 (shown in FIG. 9a) for combination with signals received from serial feed-through port 912 and distribution/combination port 922. Isolation of beam 1 and beam 2 can be measured, for example, as a difference in signal power of beam 1 transmitted or received on transmission line 924 at serial distribution port 908 and the signal power of beam 1 measured on transmission line 930 at distribution/combination port 918 or distribution/combination port 922, i.e., crossing isolation. In certain embodiments, for example, such isolation can be up to -74 dB. In other embodiments, isolation may be more or less than -74 dB depending on numerous factors, such as, for example, trace spacing, trace width, metal layer thickness, grounding, and/or shielding, among others. Isolation of beam 1 and beam 2 can also be measured, for example, as a difference in signal power of beam 1 transmitted or received on transmission line 928 at distribution/combination port 916 and the signal power of beam 1 measured on transmission line 930 at distribution/combination port 918 or distribution/combination port 922, i.e., side-by-side isolation. In certain embodiments, for example, such isolation can be up to -51 dB. In other embodiments, isolation may be more or less than -51 dB depending on numerous factors, such as, for example, trace spacing, trace width, metal layer thickness, grounding, and/or shielding, among others.

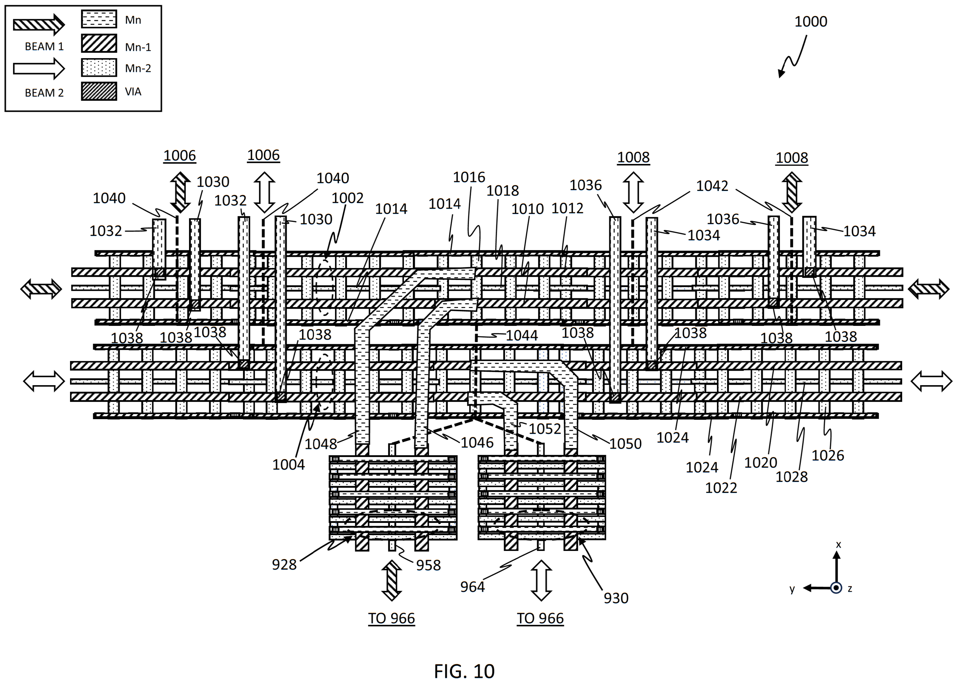

FIG. 10 is a top view diagram of an example distribution section 1000 of a dual beam RF interchange (e.g., dual beam RF interchange 900 of FIG. 9a) in accordance with some examples of the present disclosure. Distribution section 1000 may be implemented, in certain embodiments, for example and without limitation, within dual beam RF interchange 900 shown in FIG. 9a and FIG. 9b, or, alternatively, within RF interchange 314 shown in FIG. 3a. Referring to dual beam RF interchange 900, for example, distribution section 1000 may electrically couple to transmission line 928 and transmission line 930 at north pathway 904, e.g., between crossing section 966 and distribution/combination port 916 and 918, or may electrically couple to transmission line 928 and transmission line 930 at south pathway 906, e.g., between the beam two crossing section and distribution/combination port 920 and 922. Similarly, referring to RF interchange 314, for example, distribution section 1000 may electrically couple to combination ports 319 and distribution ports 318 within RF interchange 314.

Distribution section 1000 is described below with reference to dual beam RF interchange 900 shown in FIG. 9a and FIG. 9b. Distribution section 1000 includes a transmission line 1002 for propagating a first signal, e.g., beam 1, and a transmission line 1004 for propagating a second signal, e.g., beam 2. Transmission line 1002 and transmission line 1004 distribute beam 1 and beam 2, respectively, east and west and, for example, to and from crossing section 966 via transmission line 928 and transmission line 930. When transmitting, distribution section 1000 distributes beam 1 and beam 2 to respective distribution ports 1006 from which beam 1 and beam 2 propagate toward antenna elements for transmission over the air. When receiving, distribution section 1000 distributes beam 1 and beam 2, received over the air and routed to respective combination ports 1008, from combination ports 1008 to transmission line 928 and transmission line 930 over which beam 1 and beam 2 respectively propagate to crossing section 966.

In alternative embodiments, distribution ports 1006 and combination ports 1008, as illustrated in FIG. 10, may each be employed for either distribution (i.e., transmitting) or combination (i.e., receiving) when electrically coupled to further components, e.g., a phase shifter, power amplifier, low noise amplifier, and/or antenna element. Moreover, distribution section 1000 may include more or fewer distribution ports 1006 and combination ports 1008. Distribution ports 1006 are differential ports that supply RF signals to such additional components, including at least an antenna element, for transmission over the air. As illustrated in FIG. 10, beam 1 and beam 2 are distributed through separate distribution ports 1006 and later combined for transmission over the air. Likewise, combination ports 1008 are differential ports that each receive RF signals from the additional components, including at least an antenna element that receives the RF signal over the air. As illustrated in FIG. 10, beam 1 and beam 2 are received through separate combination ports 1008 and routed for combination onto transmission line 928 and transmission line 930.

Distribution section 1000 may be formed on metal layers of an integrated circuit manufacturing process that utilizes, for example, six metal layers (e.g., consistent with dual beam RF interchange 900 of FIG. 9a). Transmission line 928 and transmission line 930 are implemented in a waveguide configuration with differential traces on a second metal layer Mn-1, and metal shield line segments on a first metal layer Mn, and a third metal layer Mn-2. Transmission line 1002 and transmission line 1004 are implemented in a coplanar configuration with differential traces and top metal shield line segments on the second metal layer Mn-1, and bottom metal shield line segments on the third metal layer Mn-2. Differential traces for distribution ports 1006 and combination ports 1008, which each couple to transmission line 1002 or transmission line 1004, are on the first metal layer Mn.

More specifically, transmission line 1002 includes a trace 1010 and a trace 1012 implemented on second metal layer Mn-1. Trace 1010 and trace 1012 are coplanar with top metal shield line segments 1014 extending in parallel with trace 1010 and trace 1012. Trace 1010 and trace 1012 extend orthogonally to bottom metal shield line segments 1016 on the third metal layer Mn-2. Bottom metal shield line segments 1016 are electrically isolated from each adjacent bottom metal shield line segments 1016, with the exception of a shield connection 1018 on the third metal layer Mn-2, extending parallel to trace 1010 and trace 1012. Similarly, 1004 includes a trace 1020 and a trace 1022 implemented on second metal layer Mn-1. Trace 1020 and trace 1022 are coplanar with top metal shield line segments 1024 extending in parallel with trace 1020 and trace 1022. Trace 1020 and trace 1022 extend orthogonally to bottom metal shield line segments 1026 on the third metal layer Mn-2. Bottom metal shield line segments 1026 are electrically isolated from adjacent bottom metal shield line segments 1026, with the exception of a shield connection 1028 on the third metal layer Mn-2, extending parallel to trace 1020 and trace 1022.

Distribution ports 1006 each include a trace 1030 and a trace 1032 extending on the first metal layer Mn, to corresponding traces of transmission line 1002 or transmission line 1004. Likewise, combination ports 1008 each include a trace 1034 and a trace 1036 extending on the first metal layer Mn, to corresponding traces of transmission line 1002 or transmission line 1004. Traces 1030, 1032, 1034, and 1036 extend over (i.e., on a layer above) transmission line 1002 and transmission line 1004 and are coupled to their corresponding trace by respective vias 1038.

Distribution ports 1006 each also include a shield connection 1040 on the third metal layer Mn-2, extending parallel with trace 1030 and 1032 and positioned at a lateral midpoint between trace 1030 and trace 1032. Likewise, combination ports 1008 each also include a shield connection 1042 on the third metal layer Mn-2, extending parallel with trace 1034 and trace 1036 and positioned at a lateral midpoint between trace 1034 and trace 1036.

Shield connection 958 of transmission line 928 and shield connection 964 of transmission line 930, shown in FIG. 9a and FIG. 9b, are electrically coupled at a lateral midpoint between transmission line 928 and transmission line 930, and further electrically coupled to shield connection 1028 and shield connection 1018 at lateral midpoint between transmission line 1002 and transmission line 1004. Moreover, distribution section 1000, in certain embodiments, is symmetrically configured (east to west) about a shield coupling node 1044 of shield connection 1018, shield connection 1028, shield connection 958, and shield connection 964.

Transmission line 928 couples to transmission line 1002 via bridge traces 1046 and 1048. Similarly, transmission line 930 couples to transmission line 1004 via bridge traces 1050 and 1052. Bridge traces 1046, 1048, 1050, and 1052 are positioned on the first metal layer Mn, and extend from transmission line 928 and transmission line 930 and, generally, orthogonally over traces of transmission line 1002 and transmission line 1004. Bridge traces 1046 and 1048 extend orthogonally over transmission line 1004 before turning, toward shield coupling node 1044, over transmission line 1002 to align bridge trace 1046 parallel and over-top of trace 1010, and bridge trace 1048 parallel and over-top of trace 1012. Similarly, bridge traces 1050 and 1052 extend orthogonally toward transmission line 1004 before turning, toward shield coupling node 1044, over transmission line 1004 to align bridge trace 1050 parallel and over-top of trace 1020, and bridge trace 1052 parallel and over-top of trace 1022. Generally, bridge traces may couple to transmission lines by vias between metal layers.

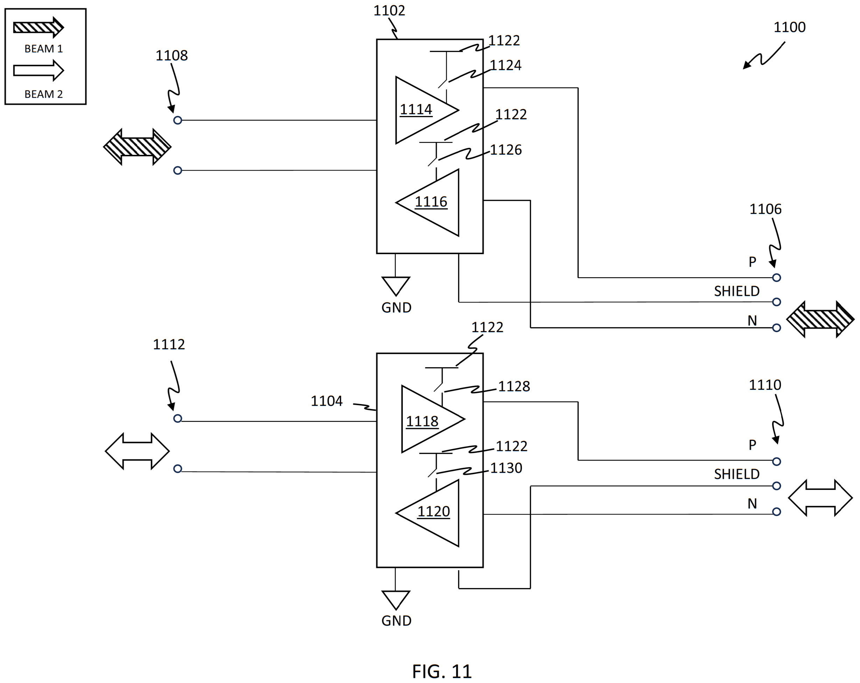

FIG. 11 is a schematic diagram of an example bidirectional RF buffer circuit 1100 for use with a dual beam RF interchange in accordance with some examples of the present disclosure. For example, bidirectional RF buffer circuit 1100 may be implemented in combination with dual beam RF interchange 900 shown in FIG. 9a and FIG. 9b, or, for example, bidirectional RF buffer circuit 1100 may be similar to and perform similar functions as signal conditioning stage 312 or signal conditioning stage 316 shown in FIGs. 3a-3d.

Bidirectional RF buffer circuit 1100 includes, generally, a bidirectional RF buffer 1102 and a bidirectional RF buffer 1104 electrically coupled between respective differential RF ports. More specifically, bidirectional RF buffer 1102 is electrically coupled between an RF port 1106 and an RF port 1108 for a first RF signal, e.g., beam 1. Likewise, bidirectional RF buffer 1104 is electrically coupled between an RF port 1110 and an RF port 1112 for a second RF signal, e.g., beam 2. Because bidirectional RF buffer 1102 and bidirectional RF buffer 1104 can operate in transmit or receive mode, RF port 1106, RF port 1108, RF port 1110, and RF port 1112 each may function as an input or an output port.

Bidirectional RF buffer 1102 includes an amplifier 1114 for applying a gain to signals conducted from RF port 1108 to RF port 1106 for transmission over the air, and an amplifier 1116 for applying a gain to signals received over the air and conducted from RF port 1106 to RF port 1108. Likewise, bidirectional RF buffer 1104 includes an amplifier 1118 for applying a gain to signals conducted from RF port 1112 to RF port 1110 for transmission over the air, and an amplifier 1120 for applying a gain to signals received over the air and conducted from RF port 1110 to RF port 1112. Amplifier 1114, amplifier 1116, amplifier 1118, and amplifier 1120 may be, for example, a power amplifier, variable gain amplifier, differential amplifier, or any other suitable active component for applying a gain to the RF signals conducted between RF port 1106 and RF port 1108, or between RF port 1110 and RF port 1112.

Bidirectional RF buffer circuit 1100 may be employed in numerous positions, for example, with respect to RF interchange 314 shown in FIG. 3a or dual beam RF interchange 900 shown in FIG. 9a and FIG. 9b. Referring to FIG. 3a, bidirectional RF buffer circuit 1100 may be employed within or in place of signal conditioning stage 312 within FEM 300. In such implementations, multiple RF signals for transmission, e.g., beam 1 and beam 2, are received at RF serial port 302A and RF serial port 302B from a DBF or from a previous FEM in a serial distribution. Beam 1 and beam 2 are received at RF port 1108 and RF port 1112, respectively, of bidirectional RF buffer circuit 1100, shown in FIG. 11. Buffered signals then propagate from RF port 1106 and RF port 1110 to an RF interchange, such as RF interchange 314 or dual beam RF interchange 900. When receiving, beam 1 and beam 2 are received from the RF interchange on RF port 1106 and RF port 1110, and the buffered signals propagate from RF port 1108 and RF port 1112, through RF serial port 302A and RF serial port 302B to the DBF or the previous FEM in the serial distribution.

Referring again to FIG. 3a, bidirectional RF buffer circuit 1100 may be employed within or in place of signal conditioning stage 316 within FEM 300. In such implementations, multiple RF signals received over the air, e.g., beam 1 and beam 2, are received at RF serial port 304A and RF serial port 304B from a subsequent FEM in a serial distribution. Beam 1 and beam 2 are received at RF port 1106 and RF port 1110, respectively, of bidirectional RF buffer circuit 1100, shown in FIG. 11. Buffered signals then propagate from RF port 1108 and RF port 1112 to an RF interchange, such as RF interchange 314 or dual beam RF interchange 900. When transmitting, beam 1 and beam 2 are received from the RF interchange on RF port 1108 and RF port 1112, and the buffered signals propagate from RF port 1106 and RF port 1110, through RF serial port 304A and RF serial port 304B to the subsequent FEM in the serial distribution.

Amplifier 1114 and amplifier 1116, in certain embodiments, are coupled to a common voltage source 1122. Common voltage source 1122 can introduce instability in the outputs of amplifier 1114 and amplifier 1116 by the current loop created by common voltage source 1122. Amplifier 1114 couples to common voltage source 1122 through a switch 1124. Similarly, amplifier 1116 couples to common voltage source 1122 through a switch 1126. Switch 1124 closes when in transmit mode to power amplifier 1114. Conversely, when in transmit mode, switch 1126 opens to remove power from amplifier 1116. When in receive mode, switch 1124 opens and switch 1126 closes to power up amplifier 1116 and to remove power from amplifier 1114.

Amplifier 1118 and amplifier 1120, in certain embodiments, are coupled to common voltage source 1122. Common voltage source 1122 can introduce instability in the outputs of amplifier 1118 and amplifier 1120 by the current loop created by common voltage source 1122. Amplifier 1118 couples to common voltage source 1122 through a switch 1128. Similarly, amplifier 1120 couples to common voltage source 1122 through a switch 1130. Switch 1128 closes when in transmit mode to power amplifier 1118. Conversely, when in transmit mode, switch 1130 opens to remove power from amplifier 1120. When in receive mode, switch 1128 opens and switch 1130 closes to power up amplifier 1120 and to remove power from amplifier 1118.

The following disclosure sets out certain aspects of the disclosed invention in the form of clauses corresponding to the claims. These clauses are provided to ensure explicit and literal support for the claims as filed, and for any future amendments, under the requirements of various jurisdictions. Each clause should be understood as forming part of the description and as an independent disclosure of inventive subject matter.

Clause 1A. A radio frequency (RF) interchange comprising: a first differential transmission line extending longitudinally between a first serial distribution port and a first feed-through port; a second differential transmission line extending longitudinally, parallel to the first differential transmission line, between a second serial distribution port and a second feed-through port; a third differential transmission line extending laterally across the first differential transmission line and the second differential transmission line toward a first distribution/combination port; a first crossing section in which traces of the first differential transmission line and traces of the third differential transmission line are canted to form respective coupling regions in which positive traces extend in parallel and overlap, and in which negative traces extend in parallel and overlap, wherein the first crossing section is configured, when a first signal propagates on the first differential transmission line, to couple the first signal onto the third differential transmission line; and a second crossing section in which traces of the second differential transmission line and the traces of the third differential transmission line are canted to form respective isolation regions in which the traces of the second differential transmission line cross orthogonally with the traces of the third differential transmission line, wherein the second crossing section is configured, when a second signal propagates on the second differential transmission line, to isolate the second signal from the third differential transmission line.

Clause 2A. The RF interchange of clause 1, wherein the first crossing section further comprises respective vias disposed in the respective coupling regions and extending respectively between a positive trace of the first differential transmission line and a positive trace of the third differential transmission line, and between a negative trace of the first differential transmission line and a negative trace of the third differential transmission line.

Clause 3A. The RF interchange of clause 1, wherein the first differential transmission line and the second differential transmission line comprise respective traces disposed in a first metal layer of a printed circuit board on which the RF interchange is embodied, and wherein the third differential transmission line comprises traces disposed in a second metal layer of the printed circuit board, the second metal layer disposed above or below the first metal layer.

Clause 4A. The RF interchange of clause 1 further comprising a first local shield disposed around the first differential transmission line, the first differential transmission line and the first local shield configured as a waveguide, wherein the first local shield comprises: a plurality of bottom metal shield line segments extending orthogonal to and below traces of the first differential transmission line, wherein the plurality of bottom metal shield line segments is each spaced from each other in a longitudinal dimension of the RF interchange; a plurality of top metal shield line segments extending orthogonal to and above the traces of the first differential transmission line, wherein the plurality of top metal shield line segments is each spaced from each other in the longitudinal dimension; a plurality of vias respectively extending from the plurality of top metal shield line segments to corresponding lines of the plurality of bottom metal shield line segments, wherein corresponding lines of the plurality of bottom metal shield line segments and corresponding lines of the plurality of top metal shield line segments are electrically coupled to form a plurality of elements of the first local shield; a shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of elements of the first local shield; and lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of elements of the first local shield.

Clause 5A. The RF interchange of clause 1 further comprising a first local shield disposed around the first differential transmission line, the first differential transmission line and the first local shield configured as a coplanar microstrip, wherein the first local shield comprises: a plurality of bottom metal shield line segments extending orthogonal to and below traces of the first differential transmission line, wherein the plurality of bottom metal shield line segments is each spaced from each other in a longitudinal dimension of the RF interchange; first and second top metal shield line segments extending parallel to and coplanar with the traces of the first differential transmission line, wherein the first and second top metal shield line segments are spaced from the traces of the first differential transmission line in a lateral dimension; a plurality of vias respectively extending from the first and second top metal shield line segments to corresponding lines of the plurality of bottom metal shield line segments, wherein corresponding lines of the plurality of bottom metal shield line segments and the first and second top metal shield line segments are electrically coupled to form a plurality of elements of the first local shield; a first shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of bottom metal shield line segments; and lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of bottom metal shield line segments.

Clause 6A. The RF interchange of clause 1 further comprising: a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield; a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; and a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; wherein the first shield connection is electrically coupled to the third shield connection at a geometric center of an intersection of the first differential transmission line and the third differential transmission line; wherein the second shield connection is electrically coupled to the third shield connection at a geometric center of an intersection of the second differential transmission line and the third differential transmission line.

Clause 7A. The RF interchange of clause 1 further comprising: a fourth differential transmission line extending laterally across the first differential transmission line and the second differential transmission line toward a second distribution/combination port; a third crossing section in which traces of the second differential transmission line and traces of the fourth differential transmission line are canted to form respective coupling regions in which positive traces extend in parallel and overlap, and in which negative traces extend in parallel and overlap, wherein the third crossing section is configured, when the second signal propagates on the second differential transmission line, to couple the second signal onto the fourth differential transmission line; and a fourth crossing section in which traces of the first differential transmission line and the traces of the fourth differential transmission line are canted to form respective isolation regions in which the traces of the first differential transmission line cross orthogonally with the traces of the fourth differential transmission line, wherein the fourth crossing section is configured, when the first signal propagates on the first differential transmission line, to isolate the first signal from the fourth differential transmission line.

Clause 8A. The RF interchange of clause 7 further comprising: a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield; a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; and a fourth local shield disposed around the fourth differential transmission line, the fourth differential transmission line and the fourth local shield configured as a waveguide, wherein the fourth local shield comprises a fourth shield connection extending parallel to and at a lateral midpoint of the fourth differential transmission line, the fourth shield connection electrically coupling a plurality of elements of the fourth local shield; wherein the first shield connection is electrically coupled to the third shield connection at a geometric center of an intersection of the first differential transmission line and the third differential transmission line; wherein the second shield connection is electrically coupled to the third shield connection at a geometric center of an intersection of the second differential transmission line and the third differential transmission line; wherein the first shield connection is electrically coupled to the fourth shield connection at a geometric center of an intersection of the first differential transmission line and the fourth differential transmission line; wherein the second shield connection is electrically coupled to the fourth shield connection at a geometric center of an intersection of the second differential transmission line and the fourth differential transmission line.

Clause 9A. The RF interchange of clause 7, wherein the first differential transmission line and the fourth differential transmission line, when propagating respective RF signals, are configured to yield isolation of at least -50 decibels with respect to each other.

Clause 10A. The RF interchange of clause 7, wherein the third differential transmission line and the fourth differential transmission line, when propagating respective RF signals, are configured to yield isolation of at least -40 decibels with respect to each other.

Clause 11A. The RF interchange of clause 1, wherein the third differential transmission line further extends laterally opposite the first distribution/combination port, toward a second distribution/combination port.

Clause 12A. A phased array antenna system including the RF interchange of any one of clauses 1-11, the phased array antenna system further comprising: a digital beamformer (DBF) configured to transmit and receive radio frequency (RF) signals over an RF input/output (RFIO) channel; and a series of dual beam front end modules electrically coupled to the RFIO channel of the DBF via a first serial distribution channel and a second serial distribution channel, each dual beam front end module (FEM) electrically coupled to a next dual beam FEM by a first feed-through channel and a second feed-through channel, each dual beam FEM comprising: the RF interchange configured to: electrically couple the first differential transmission line to the first serial distribution channel via the first serial distribution port; electrically couple the second differential transmission line to the second serial distribution channel via the second serial distribution port; and electrically couple the first serial distribution channel and the second serial distribution channel to the first feed-through channel and the second feed-through channel, respectively.

Clause 13A. The phased array antenna system of clause 12, wherein the first differential transmission line and the second differential transmission line extend in parallel with a spacing of up to 45 microns.

Clause 14A. The phased array antenna system of clause 13, wherein the first serial distribution port and the second serial distribution port, when propagating respective RF signals, are configured to yield isolation of at least -40 decibels with respect to each other.

Clause 15A. The phased array antenna system of clause 13, wherein the second serial distribution port and the first serial distribution channel, when propagating respective RF signals, are configured to yield isolation of at least -40 decibels with respect to each other.

Clause 16A. The phased array antenna system of clause 12 further comprising: a bidirectional RF buffer coupled between the first serial distribution channel and the RF interchange, the bidirectional RF buffer comprising: a transmit buffer configured to amplify a first RF signal for transmission over a channel; a receive buffer configured to amplify a second RF signal received over the channel; a power source coupled to the transmit buffer and the receive buffer, and configured to supply power to the transmit buffer and the receive buffer; a first switch coupled to the power source and configured to disconnect the receive buffer from the power source when transmitting; and a second switch coupled to the power source and configured to disconnect the transmit buffer from the power source when receiving.

Clause 1. A radio frequency (RF) interchange comprising: a first differential transmission line extending longitudinally between a first serial distribution port and a first feed-through port; a second differential transmission line extending longitudinally, parallel to the first differential transmission line, between a second serial distribution port and a second feed-through port; a third differential transmission line extending laterally across the first differential transmission line and the second differential transmission line toward a first distribution/combination port; a first crossing section in which traces of the first differential transmission line and traces of the third differential transmission line are canted to form respective coupling regions in which positive traces extend in parallel and overlap, and in which negative traces extend in parallel and overlap, wherein the first crossing section is configured, when a first signal propagates on the first differential transmission line, to couple the first signal onto the third differential transmission line; and a second crossing section in which traces of the second differential transmission line and the traces of the third differential transmission line are canted to form respective isolation regions in which the traces of the second differential transmission line cross orthogonally with the traces of the third differential transmission line, wherein the second crossing section is configured, when a second signal propagates on the second differential transmission line, to isolate the second signal from the third differential transmission line.

Clause 2. The RF interchange of clause 1, wherein the first crossing section further comprises respective vias disposed in the respective coupling regions and extending respectively between a positive trace of the first differential transmission line and a positive trace of the third differential transmission line, and between a negative trace of the first differential transmission line and a negative trace of the third differential transmission line.

Clause 3. The RF interchange of clause 1, wherein the first differential transmission line and the second differential transmission line comprise respective traces disposed in a first metal layer of a printed circuit board on which the RF interchange is embodied, and wherein the third differential transmission line comprises traces disposed in a second metal layer of the printed circuit board, the second metal layer disposed above or below the first metal layer.

Clause 4. The RF interchange of clause 1 further comprising a first local shield disposed around the first differential transmission line, the first differential transmission line and the first local shield configured as a waveguide, wherein the first local shield comprises: a plurality of bottom metal shield line segments extending orthogonal to and below traces of the first differential transmission line, wherein the plurality of bottom metal shield line segments is each spaced from each other in a longitudinal dimension of the RF interchange; a plurality of top metal shield line segments extending orthogonal to and above the traces of the first differential transmission line, wherein the plurality of top metal shield line segments is each spaced from each other in the longitudinal dimension; a plurality of vias respectively extending from the plurality of top metal shield line segments to corresponding lines of the plurality of bottom metal shield line segments, wherein corresponding lines of the plurality of bottom metal shield line segments and corresponding lines of the plurality of top metal shield line segments are electrically coupled to form a plurality of elements of the first local shield; a shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of elements of the first local shield; and lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of elements of the first local shield.

Clause 5. The RF interchange of clause 1 further comprising a first local shield disposed around the first differential transmission line, the first differential transmission line and the first local shield configured as a coplanar microstrip, wherein the first local shield comprises: a plurality of bottom metal shield line segments extending orthogonal to and below traces of the first differential transmission line, wherein the plurality of bottom metal shield line segments is each spaced from each other in a longitudinal dimension of the RF interchange; first and second top metal shield line segments extending parallel to and coplanar with the traces of the first differential transmission line, wherein the first and second top metal shield line segments are spaced from the traces of the first differential transmission line in a lateral dimension; a plurality of vias respectively extending from the first and second top metal shield line segments to corresponding lines of the plurality of bottom metal shield line segments, wherein corresponding lines of the plurality of bottom metal shield line segments and the first and second top metal shield line segments are electrically coupled to form a plurality of elements of the first local shield; a first shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of bottom metal shield line segments; and lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of bottom metal shield line segments.

Clause 6. The RF interchange of clause 1 further comprising: a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield; a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; and a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; wherein the first shield connection is electrically coupled to the third shield connection at a geometric center of an intersection of the first differential transmission line and the third differential transmission line; wherein the second shield connection is electrically coupled to the third shield connection at a geometric center of an intersection of the second differential transmission line and the third differential transmission line.

Clause 7. The RF interchange of clause 1 further comprising: a fourth differential transmission line extending laterally across the first differential transmission line and the second differential transmission line toward a second distribution/combination port; a third crossing section in which traces of the second differential transmission line and traces of the fourth differential transmission line are canted to form respective coupling regions in which positive traces extend in parallel and overlap, and in which negative traces extend in parallel and overlap, wherein the third crossing section is configured, when the second signal propagates on the second differential transmission line, to couple the second signal onto the fourth differential transmission line; and a fourth crossing section in which traces of the first differential transmission line and the traces of the fourth differential transmission line are canted to form respective isolation regions in which the traces of the first differential transmission line cross orthogonally with the traces of the fourth differential transmission line, wherein the fourth crossing section is configured, when the first signal propagates on the first differential transmission line, to isolate the first signal from the fourth differential transmission line.

Clause 8. The RF interchange of clause 7 further comprising: a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield; a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; and a fourth local shield disposed around the fourth differential transmission line, the fourth differential transmission line and the fourth local shield configured as a waveguide, wherein the fourth local shield comprises a fourth shield connection extending parallel to and at a lateral midpoint of the fourth differential transmission line, the fourth shield connection electrically coupling a plurality of elements of the fourth local shield; wherein the first shield connection is electrically coupled to the third shield connection at a geometric center of an intersection of the first differential transmission line and the third differential transmission line; wherein the second shield connection is electrically coupled to the third shield connection at a geometric center of an intersection of the second differential transmission line and the third differential transmission line; wherein the first shield connection is electrically coupled to the fourth shield connection at a geometric center of an intersection of the first differential transmission line and the fourth differential transmission line; wherein the second shield connection is electrically coupled to the fourth shield connection at a geometric center of an intersection of the second differential transmission line and the fourth differential transmission line.

Clause 9. The RF interchange of clause 7, wherein the first differential transmission line and the fourth differential transmission line, when propagating respective RF signals, are configured to yield isolation of at least -50 decibels with respect to each other.

Clause 10. The RF interchange of clause 7, wherein the third differential transmission line and the fourth differential transmission line, when propagating respective RF signals, are configured to yield isolation of at least -40 decibels with respect to each other.

Clause 11. The RF interchange of clause 1, wherein the third differential transmission line further extends laterally opposite the first distribution/combination port, toward a second distribution/combination port.

Clause 12. A phased array antenna system comprising: a digital beamformer (DBF) configured to transmit and receive radio frequency (RF) signals over an RF input/output (RFIO) channel; and a series of dual beam front end modules electrically coupled to the RFIO channel of the DBF via a first serial distribution channel and a second serial distribution channel, each dual beam front end module (FEM) electrically coupled to a next dual beam FEM by a first feed-through channel and a second feed-through channel, each dual beam FEM comprising: an RF interchange configured to: electrically couple a first port and a second port to the first serial distribution channel; electrically couple a third port and a fourth port to the second serial distribution channel; and electrically couple the first serial distribution channel and the second serial distribution channel to the first feed-through channel and the second feed-through channel, respectively.

Clause 13. The phased array antenna system of clause 12, wherein the first serial distribution channel comprises a first differential transmission line and the second serial distribution port comprises a second differential transmission line, wherein the first port, the second port, the third port, and the fourth port each comprise respective differential transmission lines, and wherein the first feed-through channel and the second feed-through channel each comprise respective differential transmission lines.

Clause 14. The phased array antenna system of clause 13, wherein the first port is disposed adjacent to the third port, wherein the first port is electrically coupled to the RF interchange by a third differential transmission line, wherein the third port is electrically coupled to the RF interchange by a fourth differential transmission line, and wherein the third differential transmission line and the fourth differential transmission line extend in parallel with a spacing of 45 microns.

Clause 15. The phased array antenna system of clause 14, wherein the first port and the third port, when propagating respective RF signals, are configured to yield isolation of at least -40 decibels with respect to each other.

Clause 16. The phased array antenna system of clause 14, wherein the third port and the first serial distribution channel, when propagating respective RF signals, are configured to yield isolation of at least -40 decibels with respect to each other.

Clause 17. The phased array antenna system of clause 12 further comprising: a bidirectional RF buffer coupled between the first serial distribution channel and the RF interchange, the bidirectional RF buffer comprising: a transmit buffer configured to amplify a first RF signal for transmission over a channel; a receive buffer configured to amplify a second RF signal received over the channel; a power source coupled to the transmit buffer and the receive buffer, and configured to supply power to the transmit buffer and the receive buffer; a first switch coupled to the power source and configured to disconnect the receive buffer from the power source when transmitting; and a second switch coupled to the power source and configured to disconnect the transmit buffer from the power source when receiving.

Clause 18. The phased array antenna system of clause 12, wherein the RF interchange comprises: a first differential transmission line extending longitudinally between the first port and the second port; a second differential transmission line extending longitudinally, parallel to the first differential transmission line, between the third port and the fourth port; a third differential transmission line extending laterally across the first differential transmission line and the second differential transmission line toward a first distribution/combination port; a first crossing section in which traces of the first differential transmission line and traces of the third differential transmission line are canted to form respective coupling regions in which positive traces extend in parallel and overlap, and in which negative traces extend in parallel and overlap, wherein the first crossing section is configured, when a first signal propagates on the first differential transmission line, to couple the first signal onto the third differential transmission line; and a second crossing section in which traces of the second differential transmission line and the traces of the third differential transmission line are canted to form respective isolation regions in which the traces of the second differential transmission line cross orthogonally with the traces of the third differential transmission line, wherein the second crossing section is configured, when a second signal propagates on the second differential transmission line, to isolate the second signal from the third differential transmission line.

Clause 19. The phased array antenna system of clause 18, wherein the first crossing section further comprises respective vias disposed in the respective coupling regions and extending respectively between a positive trace of the first differential transmission line and a positive trace of the third differential transmission line, and between a negative trace of the first differential transmission line and a negative trace of the third differential transmission line.

Clause 20. The phased array antenna system of clause 18, further comprising a first local shield disposed around the first differential transmission line, the first differential transmission line and the first local shield configured as a coplanar microstrip, wherein the first local shield comprises: a plurality of bottom metal shield line segments extending orthogonal to and below traces of the first differential transmission line, wherein the plurality of bottom metal shield line segments is each spaced from each other in a longitudinal dimension of the RF interchange; first and second top metal shield line segments extending parallel to and coplanar with the traces of the first differential transmission line, wherein the first and second top metal shield line segments are spaced from the traces of the first differential transmission line in a lateral dimension; a plurality of vias respectively extending from the first and second top metal shield line segments to corresponding lines of the plurality of bottom metal shield line segments, wherein corresponding lines of the plurality of bottom metal shield line segments and the first and second top metal shield line segments are electrically coupled to form a plurality of elements of the first local shield; a first shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of bottom metal shield line segments; and lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of bottom metal shield line segments.

Clause 21. The phased array antenna system of clause 18, further comprising: a fourth differential transmission line extending laterally across the first differential transmission line and the second differential transmission line toward a second distribution/combination port; a third crossing section in which traces of the second differential transmission line and traces of the fourth differential transmission line are canted to form respective coupling regions in which positive traces extend in parallel and overlap, and in which negative traces extend in parallel and overlap, wherein the third crossing section is configured, when the second signal propagates on the second differential transmission line, to couple the second signal onto the fourth differential transmission line; and a fourth crossing section in which traces of the first differential transmission line and the traces of the fourth differential transmission line are canted to form respective isolation regions in which the traces of the first differential transmission line cross orthogonally with the traces of the fourth differential transmission line, wherein the fourth crossing section is configured, when the first signal propagates on the first differential transmission line, to isolate the first signal from the fourth differential transmission line.

Clause 22. The phased array antenna system of clause 21, further comprising: a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield; a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; and a fourth local shield disposed around the fourth differential transmission line, the fourth differential transmission line and the fourth local shield configured as a waveguide, wherein the fourth local shield comprises a fourth shield connection extending parallel to and at a lateral midpoint of the fourth differential transmission line, the fourth shield connection electrically coupling a plurality of elements of the fourth local shield; wherein the first shield connection is electrically coupled to the third shield connection at a geometric center of an intersection of the first differential transmission line and the third differential transmission line; wherein the second shield connection is electrically coupled to the third shield connection at a geometric center of an intersection of the second differential transmission line and the third differential transmission line; wherein the first shield connection is electrically coupled to the fourth shield connection at a geometric center of an intersection of the first differential transmission line and the fourth differential transmission line; wherein the second shield connection is electrically coupled to the fourth shield connection at a geometric center of an intersection of the second differential transmission line and the fourth differential transmission line.

Clause 23. A bidirectional radio frequency (RF) buffer circuit comprising: a transmit buffer configured to amplify a first RF signal for transmission over a channel; a receive buffer configured to amplify a second RF signal received over the channel; a power source coupled to the transmit buffer and the receive buffer, and configured to supply power to the transmit buffer and the receive buffer; and a switch coupled to the power source and configured to disconnect the receive buffer from the power source when transmitting.

Clause 24. A radio frequency (RF) transmission line having at least a first metal layer, a second metal layer, and a third metal layer, the RF transmission line comprising: a differential pair of traces extending in parallel in a longitudinal dimension and disposed on the second metal layer; a plurality of top metal shield line segments extending in a lateral dimension orthogonal to the differential pair of traces and disposed in the first metal layer above the differential pair of traces; a plurality of bottom metal shield line segments extending in the lateral dimension orthogonal to the differential pair of traces and disposed in the third metal layer below the differential pair of traces; a plurality of vias extending from the first metal layer to the third metal layer and electrically coupling corresponding top metal shield line segments, of the plurality of top metal shield line segments, and corresponding bottom metal shield line segments, of the plurality of bottom metal shield line segments; and a shield connection extending parallel to the differential pair of traces in the longitudinal dimension and disposed on the third metal layer, the shield connection electrically coupling the plurality of bottom metal shield line segments at a midpoint of the plurality of bottom metal shield line segments in the lateral dimension.

Clause 25. The RF transmission line of clause 24 further comprising: a first lateral shield connection extending parallel to the differential pair of traces in the longitudinal dimension and disposed on the third metal layer, the first lateral shield connection electrically coupling the plurality of bottom metal shield line segments at a first endpoint of the plurality of metal shield line segments in the lateral dimension; and a second lateral shield connection extending parallel to the differential pair of traces in the longitudinal dimension and disposed on the third metal layer, the first lateral shield connection electrically coupling the plurality of bottom metal shield line segments at a second endpoint of the plurality of metal shield line segments in the lateral dimension, opposite the first endpoint.

Clause 26. The RF transmission line of clause 24, wherein each of the plurality of bottom metal shield line segments is electrically isolated from each other, other than electrical coupling provided by the shield connection.

Clause 27. The RF transmission line of clause 24, wherein each of the plurality of top metal shield line segments is electrically isolated from each other, other than electrical coupling provided by the plurality of vias.

Clause 28. The RF transmission line of clause 24 disposed on an integrated circuit including at least one metal layer above the first metal layer or below the third metal layer, and on which at least one digital circuit is embodied.

Clause 29. A radio frequency (RF) transmission line having at least a first metal layer, a second metal layer, and a third metal layer, the RF transmission line comprising: a differential pair of traces extending in parallel in a longitudinal dimension and disposed on the first metal layer; a first top metal shield line and a second top metal shield line extending in parallel to the differential pair of traces and disposed in the first metal layer coplanar with the differential pair of traces, the first top metal shield line spaced from the differential pair of traces in a lateral dimension, and the second top metal shield line spaced from the differential pair of traces in the lateral dimension and opposite the first top metal shield line; a plurality of bottom metal shield line segments extending in the lateral dimension orthogonal to the differential pair of traces and disposed in the third metal layer below the differential pair of traces; a first plurality of vias extending from the first top metal shield line in the first metal layer to the third metal layer and electrically coupling the first top metal shield line to a corresponding bottom metal shield line, of the plurality of bottom metal shield line segments; a second plurality of vias extending from the second top metal shield line in the first metal layer to the third metal layer and electrically coupling the second top metal shield line to a corresponding bottom metal shield line, of the plurality of bottom metal shield line segments; and a shield connection extending parallel to the differential pair of traces in the longitudinal dimension and disposed on the third metal layer, the shield connection electrically coupling the plurality of bottom metal shield line segments at a midpoint of the plurality of bottom metal shield line segments in the lateral dimension.

Clause 30. The RF transmission line of clause 29 further comprising: a first lateral shield connection extending parallel to the differential pair of traces in the longitudinal dimension and disposed on the third metal layer, the first lateral shield connection electrically coupling the plurality of bottom metal shield line segments at a first endpoint of the plurality of metal shield line segments in the lateral dimension; and a second lateral shield connection extending parallel to the differential pair of traces in the longitudinal dimension and disposed on the third metal layer, the first lateral shield connection electrically coupling the plurality of bottom metal shield line segments at a second endpoint of the plurality of metal shield line segments in the lateral dimension, opposite the first endpoint.

Clause 31. The RF transmission line of clause 29, wherein each of the plurality of bottom metal shield line segments is electrically isolated from each other, other than electrical coupling provided by the shield connection.

Clause 32. The RF transmission line of clause 29, wherein the first top metal shield line is electrically isolated from the second top metal shield line, other than electrical coupling provided by the first plurality of vias and the second plurality of vias.

Clause 33. The RF transmission line of clause 29 disposed on an integrated circuit including at least one metal layer below the third metal layer, and on which at least one digital circuit is embodied.

Clause 34. A radio frequency (RF) transmission line having at least a first metal layer, a second metal layer, and a third metal layer, the RF transmission line comprising: a trace extending in a longitudinal dimension and disposed on the second metal layer; a plurality of top metal shield line segments extending in a lateral dimension orthogonal to the trace and disposed in the first metal layer above the trace; a plurality of bottom metal shield line segments extending in the lateral dimension orthogonal to the trace and disposed in the third metal layer below the trace; a plurality of vias extending from the first metal layer to the third metal layer and electrically coupling corresponding top metal shield line segments, of the plurality of top metal shield line segments, and corresponding bottom metal shield line segments, of the plurality of bottom metal shield line segments; and a shield connection extending parallel to the trace in the longitudinal dimension and disposed on the third metal layer, the shield connection electrically coupling the plurality of bottom metal shield line segments at a midpoint of the plurality of bottom metal shield line segments in the lateral dimension.

Clause 35. The RF transmission line of clause 34 further comprising: a first lateral shield connection extending parallel to the trace in the longitudinal dimension and disposed on the third metal layer, the first lateral shield connection electrically coupling the plurality of bottom metal shield line segments at a first endpoint of the plurality of metal shield line segments in the lateral dimension; and a second lateral shield connection extending parallel to the trace in the longitudinal dimension and disposed on the third metal layer, the first lateral shield connection electrically coupling the plurality of bottom metal shield line segments at a second endpoint of the plurality of metal shield line segments in the lateral dimension, opposite the first endpoint.

Clause 36. The RF transmission line of clause 34, wherein each of the plurality of bottom metal shield line segments is electrically isolated from each other, other than electrical coupling provided by the shield connection.

Clause 37. The RF transmission line of clause 34, wherein each of the plurality of top metal shield line segments is electrically isolated from each other, other than electrical coupling provided by the plurality of vias.

Clause 38. The RF transmission line of clause 34 disposed on an integrated circuit including at least one metal layer above the first metal layer or below the third metal layer, and on which at least one digital circuit is embodied.

Clause 39. A radio frequency (RF) transmission line having at least a first metal layer, a second metal layer, and a third metal layer, the RF transmission line comprising: a trace extending in a longitudinal dimension and disposed on the first metal layer; a first top metal shield line and a second top metal shield line extending in parallel to the trace and disposed in the first metal layer coplanar with the trace, the first top metal shield line spaced from the trace in a lateral dimension, and the second top metal shield line spaced from the trace in the lateral dimension and opposite the first top metal shield line; a plurality of bottom metal shield line segments extending in the lateral dimension orthogonal to the trace and disposed in the third metal layer below the trace; a first plurality of vias extending from the first top metal shield line in the first metal layer to the third metal layer and electrically coupling the first top metal shield line to a corresponding bottom metal shield line, of the plurality of bottom metal shield line segments; a second plurality of vias extending from the second top metal shield line in the first metal layer to the third metal layer and electrically coupling the second top metal shield line to a corresponding bottom metal shield line, of the plurality of bottom metal shield line segments; and a shield connection extending parallel to the trace in the longitudinal dimension and disposed on the third metal layer, the shield connection electrically coupling the plurality of bottom metal shield line segments at a midpoint of the plurality of bottom metal shield line segments in the lateral dimension.

Clause 40. The RF transmission line of clause 39 further comprising: a first lateral shield connection extending parallel to the trace in the longitudinal dimension and disposed on the third metal layer, the first lateral shield connection electrically coupling the plurality of bottom metal shield line segments at a first endpoint of the plurality of metal shield line segments in the lateral dimension; and a second lateral shield connection extending parallel to the trace in the longitudinal dimension and disposed on the third metal layer, the first lateral shield connection electrically coupling the plurality of bottom metal shield line segments at a second endpoint of the plurality of metal shield line segments in the lateral dimension, opposite the first endpoint.

Clause 41. The RF transmission line of clause 39, wherein each of the plurality of bottom metal shield line segments is electrically isolated from each other, other than electrical coupling provided by the shield connection.

Clause 42. The RF transmission line of clause 39, wherein the first top metal shield line is electrically isolated from the second top metal shield line, other than electrical coupling provided by the first plurality of vias and the second plurality of vias.

Clause 43. The RF transmission line of clause 39 disposed on an integrated circuit including at least one metal layer below the third metal layer, and on which at least one digital circuit is embodied.

The clauses above are provided for clarity of disclosure and support, and do not limit the scope of the appended claims. Features described in any one clause may be combined with features of any other clause, except where such combinations are clearly incompatible.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data that cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, embedded systems, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

Many embodiments of the technology described herein may take the form of computer- or controller-executable instructions, including routines executed by a programmable computer or controller. Those skilled in the relevant art will appreciate that the technology can be practiced on computer/controller systems other than those shown and described above. The technology can be embodied in a special-purpose computer, controller or data processor that is specifically programmed, configured or constructed to perform one or more of the computer-executable instructions described above. Accordingly, the terms "computer" and "controller" as generally used herein refer to any data processor and can include Internet appliances and hand-held devices (including palm-top computers, wearable computers, cellular or mobile phones, multi-processor systems, processor-based or programmable consumer electronics, network computers, mini computers and the like). Information handled by these computers can be presented at any suitable display medium, including an organic light emitting diode (OLED) display or liquid crystal display (LCD).

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

## Claims

1. A radio frequency (RF) interchange comprising:
a first differential transmission line extending longitudinally between a first serial distribution port and a first feed-through port;
a second differential transmission line extending longitudinally, parallel to the first differential transmission line, between a second serial distribution port and a second feed-through port;
a third differential transmission line extending laterally across the first differential transmission line and the second differential transmission line toward a first distribution/combination port;
a first crossing section in which traces of the first differential transmission line and traces of the third differential transmission line are canted to form respective coupling regions in which positive traces extend in parallel and overlap, and in which negative traces extend in parallel and overlap, wherein the first crossing section is configured, when a first signal propagates on the first differential transmission line, to couple the first signal onto the third differential transmission line; and
a second crossing section in which traces of the second differential transmission line and the traces of the third differential transmission line are canted to form respective isolation regions in which the traces of the second differential transmission line cross orthogonally with the traces of the third differential transmission line, wherein the second crossing section is configured, when a second signal propagates on the second differential transmission line, to isolate the second signal from the third differential transmission line.

2. The RF interchange of claim 1, wherein the first crossing section further comprises respective vias disposed in the respective coupling regions and extending respectively between a positive trace of the first differential transmission line and a positive trace of the third differential transmission line, and between a negative trace of the first differential transmission line and a negative trace of the third differential transmission line.

3. The RF interchange of claim 1, wherein the first differential transmission line and the second differential transmission line comprise respective traces disposed in a first metal layer of a printed circuit board on which the RF interchange is embodied, and wherein the third differential transmission line comprises traces disposed in a second metal layer of the printed circuit board, the second metal layer disposed above or below the first metal layer.

4. The RF interchange of claim 1 further comprising a first local shield disposed around the first differential transmission line, the first differential transmission line and the first local shield configured as a waveguide, wherein the first local shield comprises:
a plurality of bottom metal shield line segments extending orthogonal to and below traces of the first differential transmission line, wherein the plurality of bottom metal shield line segments is each spaced from each other in a longitudinal dimension of the RF interchange;
a plurality of top metal shield line segments extending orthogonal to and above the traces of the first differential transmission line, wherein the plurality of top metal shield line segments is each spaced from each other in the longitudinal dimension;
a plurality of vias respectively extending from the plurality of top metal shield line segments to corresponding lines of the plurality of bottom metal shield line segments, wherein corresponding lines of the plurality of bottom metal shield line segments and corresponding lines of the plurality of top metal shield line segments are electrically coupled to form a plurality of elements of the first local shield;
a shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of elements of the first local shield; and
lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of elements of the first local shield.

5. The RF interchange of claim 1 further comprising a first local shield disposed around the first differential transmission line, the first differential transmission line and the first local shield configured as a coplanar microstrip, wherein the first local shield comprises:
a plurality of bottom metal shield line segments extending orthogonal to and below traces of the first differential transmission line, wherein the plurality of bottom metal shield line segments is each spaced from each other in a longitudinal dimension of the RF interchange;
first and second top metal shield line segments extending parallel to and coplanar with the traces of the first differential transmission line, wherein the first and second top metal shield line segments are spaced from the traces of the first differential transmission line in a lateral dimension;
a plurality of vias respectively extending from the first and second top metal shield line segments to corresponding lines of the plurality of bottom metal shield line segments, wherein corresponding lines of the plurality of bottom metal shield line segments and the first and second top metal shield line segments are electrically coupled to form a plurality of elements of the first local shield;
a first shield connection coplanar with and extending orthogonal to the plurality of bottom metal shield line segments in the longitudinal dimension at a midpoint, in a lateral dimension, of the plurality of bottom metal shield line segments, wherein the shield connection electrically couples the plurality of bottom metal shield line segments; and
lateral shield connections coplanar with and extending orthogonal to the plurality of bottom metal shield line segments in the longitudinal dimension at both lateral ends of the plurality of bottom metal shield line segments, wherein the lateral shield connections electrically couple the plurality of bottom metal shield line segments.

6. The RF interchange of claim 1 further comprising:
a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield;
a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield; and
a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield;
wherein the first shield connection is electrically coupled to the third shield connection at a geometric center of an intersection of the first differential transmission line and the third differential transmission line;
wherein the second shield connection is electrically coupled to the third shield connection at a geometric center of an intersection of the second differential transmission line and the third differential transmission line.

7. The RF interchange of claim 1 further comprising:
a fourth differential transmission line extending laterally across the first differential transmission line and the second differential transmission line toward a second distribution/combination port;
a third crossing section in which traces of the second differential transmission line and traces of the fourth differential transmission line are canted to form respective coupling regions in which positive traces extend in parallel and overlap, and in which negative traces extend in parallel and overlap, wherein the third crossing section is configured, when the second signal propagates on the second differential transmission line, to couple the second signal onto the fourth differential transmission line; and
a fourth crossing section in which traces of the first differential transmission line and the traces of the fourth differential transmission line are canted to form respective isolation regions in which the traces of the first differential transmission line cross orthogonally with the traces of the fourth differential transmission line, wherein the fourth crossing section is configured, when the first signal propagates on the first differential transmission line, to isolate the first signal from the fourth differential transmission line.

8. The RF interchange of claim 7 further comprising:
a first local shield disposed around the first differential transmission line, the first differential transmission line and the first local shield configured as a coplanar microstrip, wherein the first local shield comprises a first shield connection extending parallel to and at a lateral midpoint of the first differential transmission line, the first shield connection electrically coupling a plurality of elements of the first local shield;
a second local shield disposed around the second differential transmission line, the second differential transmission line and the second local shield configured as a coplanar microstrip, wherein the second local shield comprises a second shield connection extending parallel to and at a lateral midpoint of the second differential transmission line, the second shield connection electrically coupling a plurality of elements of the second local shield;
a third local shield disposed around the third differential transmission line, the third differential transmission line and the third local shield configured as a waveguide, wherein the third local shield comprises a third shield connection extending parallel to and at a lateral midpoint of the third differential transmission line, the third shield connection electrically coupling a plurality of elements of the third local shield; and
a fourth local shield disposed around the fourth differential transmission line, the fourth differential transmission line and the fourth local shield configured as a waveguide, wherein the fourth local shield comprises a fourth shield connection extending parallel to and at a lateral midpoint of the fourth differential transmission line, the fourth shield connection electrically coupling a plurality of elements of the fourth local shield;
wherein the first shield connection is electrically coupled to the third shield connection at a geometric center of an intersection of the first differential transmission line and the third differential transmission line;
wherein the second shield connection is electrically coupled to the third shield connection at a geometric center of an intersection of the second differential transmission line and the third differential transmission line;
wherein the first shield connection is electrically coupled to the fourth shield connection at a geometric center of an intersection of the first differential transmission line and the fourth differential transmission line;
wherein the second shield connection is electrically coupled to the fourth shield connection at a geometric center of an intersection of the second differential transmission line and the fourth differential transmission line.

9. The RF interchange of claim 7, wherein the first differential transmission line and the fourth differential transmission line, when propagating respective RF signals, are configured to yield isolation of at least -50 decibels with respect to each other.

10. The RF interchange of claim 7, wherein the third differential transmission line and the fourth differential transmission line, when propagating respective RF signals, are configured to yield isolation of at least -40 decibels with respect to each other.

11. The RF interchange of claim 1, wherein the third differential transmission line further extends laterally opposite the first distribution/combination port, toward a second distribution/combination port.

12. A phased array antenna system including the RF interchange of any one of claims 1-11, the phased array antenna system further comprising:
a digital beamformer (DBF) configured to transmit and receive radio frequency (RF) signals over an RF input/output (RFIO) channel; and
a series of dual beam front end modules electrically coupled to the RFIO channel of the DBF via a first serial distribution channel and a second serial distribution channel, each dual beam front end module (FEM) electrically coupled to a next dual beam FEM by a first feed-through channel and a second feed-through channel, each dual beam FEM comprising:
the RF interchange configured to:
electrically couple the first differential transmission line to the first serial distribution channel via the first serial distribution port;
electrically couple the second differential transmission line to the second serial distribution channel via the second serial distribution port; and
electrically couple the first serial distribution channel and the second serial distribution channel to the first feed-through channel and the second feed-through channel, respectively.

13. The phased array antenna system of claim 12, wherein the first differential transmission line and the second differential transmission line extend in parallel with a spacing of up to 45 microns.

14. The phased array antenna system of claim 13, wherein the first serial distribution port and the second serial distribution port, when propagating respective RF signals, are configured to yield isolation of at least -40 decibels with respect to each other.

15. The phased array antenna system of claim 13, wherein the second serial distribution port and the first serial distribution channel, when propagating respective RF signals, are configured to yield isolation of at least -40 decibels with respect to each other.

16. The phased array antenna system of claim 12 further comprising:
a bidirectional RF buffer coupled between the first serial distribution channel and the RF interchange, the bidirectional RF buffer comprising:
a transmit buffer configured to amplify a first RF signal for transmission over a channel;
a receive buffer configured to amplify a second RF signal received over the channel;
a power source coupled to the transmit buffer and the receive buffer, and configured to supply power to the transmit buffer and the receive buffer;
a first switch coupled to the power source and configured to disconnect the receive buffer from the power source when transmitting; and
a second switch coupled to the power source and configured to disconnect the transmit buffer from the power source when receiving.
